# EUROPEAN PATENT APPLICATION

(11) **EP 4 376 516 A1**
(43) Date of publication of application: **29.05.2024**
(21) Application number: 22846321.2
(22) Date of filing: 12.07.2022
(51) Int. Cl.: H04W 68/02, H04W 76/11, H04W 76/15, H04W 92/18, H04W 92/10

(54) **COMMUNICATION PAGING BASED ON MULTIPLE PATHS**

(30) Priority: 21.07.2021 KR 20210095917; 21.03.2022 US 202263321776 P
(71) Applicant: LG Electronics Inc., Yeongdeungpo-gu Seoul 07336 (KR)
(72) Inventor: KIM, Laeyoung, Seoul 06772 (KR); YOUN, Myungjune, Seoul 06772 (KR)
(74) Representative: Maikowski & Ninnemann Patentanwälte Partnerschaft mbB
(86) International application number: PCT/KR2022/095111
(87) International publication number: WO 2023/003452

(57) **Abstract**

One disclosure of the present specification provides a method by which an AMF performs communication, and the method comprises the steps of: receiving a first registration request message; transmitting a first registration accept message; receiving a second registration request message; transmitting a second registration accept message; and transmitting a paging message, wherein the second registration request message includes information notifying that a second path through which the second registration request message has been transmitted is added as a path for a UE, the paging message is transmitted to the UE through a paging path, and the paging path is determined to be either the second path or the first path through which the first registration request message has been transmitted.

## Description

### TECHNICAL FIELD

The present disclosure relates to mobile communication.

### BACKGROUND ART

3rd generation partnership project (3GPP) long-term evolution (LTE) is a technology that enables high-speed packet communications. Many initiatives have been proposed for LTE goals, including those aimed at reducing user and provider costs, improving service quality, and expanding and improving coverage and system capacity. 3GPP LTE requires lower cost per bit, improved service availability, flexible use of frequency bands, simple structure, open interface, and proper power consumption of the terminal as upper-level requirements.

Work has begun at the International Telecommunication Union (ITU) and 3GPP to develop requirements and specifications for New Radio (NR) systems. 3GPP must identify and develop the technology components needed to successfully standardize a new Radio Access Technology (RAT) satisfying both urgent market needs and the long-term requirements determined in the ITU-R (International Mobile Telecommunications) international mobile telecommunications (IMT)-2020 process. In addition, NR must be able to use a spectral band in the range of at least 100 GHz that may be used for wireless communications even further into the future.

NR aims to be a single technology framework that covers all usage scenarios, requirements and deployment scenarios, including enhanced mobile broadband (eMBB), massive machine-type-communications (mMTC), ultra-reliable and low latency communications (URLLC), and more. NR may be essentially forward compatible.

Conventionally, a user equipment (UE) does not communicate over multiple paths within a single access (e.g., 3GPP access or non-3GPP access). Herein, the multiple paths may refer to communication paths between the UE and the New Generation Radio Access Network (NG-RAN).

More recently, the UE may be supported to be provided with services from the network via multiple paths, including paths through UE-to-Network Relay. The UE may perform a registration procedure for each of the multiple paths. The AMF serving each of the multiple paths then manages and/or maintains the UE's Connection Management (CM) state for each of the multiple paths.

Traditionally, there has been no effective way to support communications based on multiple paths between the UE and the network.

For example, in this situation, if the UE is in the RRC_IDLE state and/or CM-IDLE state, when the AMF transmits a paging message to the UE, a separate paging message must be transmitted for each of the multiple paths. Transmitting a paging message for each of the multiple paths may result in wasted radio resources.

For example, one of the many paths may be an indirect path that the UE has formed with the NG-RAN through UE-to-Network Relay. Thus, a UE may have both direct and indirect paths directly connected to the NG-RAN. In this case, the AMF needs to transmit paging messages to the UE over each of the direct and indirect paths. The problem with this is that both the UE and the UE-to-Network Relay have to perform actions to receive the paging message, resulting in power consumption.

### DISCLOSURE

### TECHNICAL PROBLEM

Accordingly, a disclosure of the present specification has been made in an effort to solve the aforementioned problem.

### TECHNICAL SOLUTION

In order to solve the above problems, one disclosure of the present specification provides a method for an AMF to perform communication. The method may include receiving a first registration request message; transmitting a first registration accept message; receiving a second registration request message; transmitting a second registration accept message; and transmitting a paging message.

In order to solve the above problems, one disclosure of the present specification provides an AMF for performing communication. The AMF may include: at least one processor; and at least one memory storing instructions, operatively electrically coupled to the at least one processor, wherein instructions being executed by the at least one processor to perform operations comprising: receiving a first registration request message; transmitting a first registration accept message; receiving a second registration request message; transmitting a second registration accept message; and transmitting a paging message.

In order to solve the above problems, one disclosure of the present specification provides a method for a UE to perform communication. The method may include transmitting a first registration request message; receiving a first registration accept message; transmitting a second registration request message; receiving a second registration accept message; and receiving a paging message.

In order to solve the above problems, one disclosure of the present specification provides a UE for performing communication. The UE may include: at least one processor; and at least one memory storing instructions, operatively electrically coupled to the at least one processor, wherein instructions being executed by the at least one processor to perform operations comprising: transmitting a first registration request message; receiving a first registration accept message; transmitting a second registration request message; receiving a second registration accept message; and receiving a paging message.

In order to solve the above problems, one disclosure of the present specification provides an appratus for mobile communication. The apparatus may include: at least one processor; and at least one memory storing instructions, operatively electrically coupled to the at least one processor, wherein instructions being executed by the at least one processor to perform operations comprising: generating the first registration request message; obtaining the first registration accept message; generating the second registration request message; obtaining the second registration accept message; and obtaining the paging message.

In order to solve the above problems, one disclosure of the present specification provides a non-transitory computer-readable storage medium recording instructions. Wherein the instructions, when executed by one or more processors, cause the one or more processors to perform operations comrpsing: generating the first registration request message; obtaining the first registration accept message; generating the second registration request message; obtaining the second registration accept message; and obtaining the paging message.

### ADVANTAGEOUS EFFECTS

According to the present disclosure of the present specification, it is possible to solve the problems of the prior art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of a wireless device to which implementations of the present disclosure is applied.
FIG. 3 shows an example of a wireless device to which implementations of the present disclosure is applied.
FIG. 4 shows an example of 5G system architecture to which implementations of the present disclosure is applied.
FIG. 5 is another exemplary diagram showing the structure of a radio interface protocol (Radio Interface Protocol) between the UE and the gNB.
FIGS. 6a and 6b show an example of a registration procedure to which implementations of the present disclosure is applied.
FIG. 7 shows an example of the architecture of a UE-to-Network Relay.
FIG. 8a illustrates a first example where a UE is provided with serveces over two paths. FIG. 8b illustrates a second example where the UE is provided with serveces via two paths. FIG. 8c illustrates a third example where the UE is provided with serveces via two paths. FIG. 8d illustrates a fourth example where the UE is provided with serveces via two paths.
FIGS. 9a and 9b illustrate one example of operation according to the fourth example of the present disclosure.
FIGS. 10a and 10b illustrate one example of operation according to the fifth example of the present disclosure.
FIGS. 11a and 11b illustrate one example of operation according to the sixth example of the present disclosure.
FIG. 12 illustrates one example of operation of a UE and one example of operation of an AMF according to the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the UE may be a laptop computer, a mobile phone, a PDA, a smartphone, a multimedia device, or other portable device, or may be a stationary device such as a PC or a car mounted device.

Hereinafter, the UE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

### I. Techniques and procedures applicable to the present disclosure of the present specification

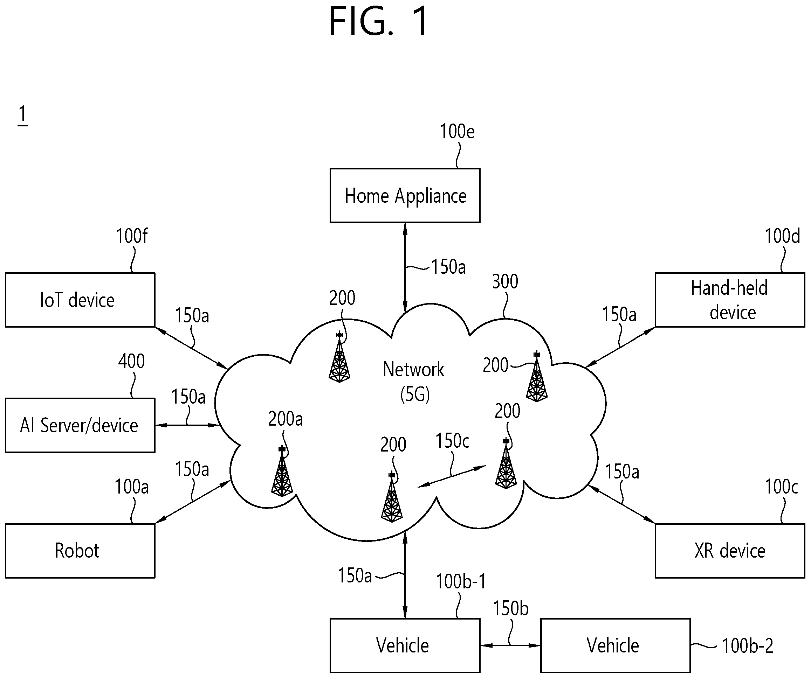

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5GNR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

Here, the radio communication technologies implemented in the wireless devices in the present disclosure may include narrowband internet-of things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

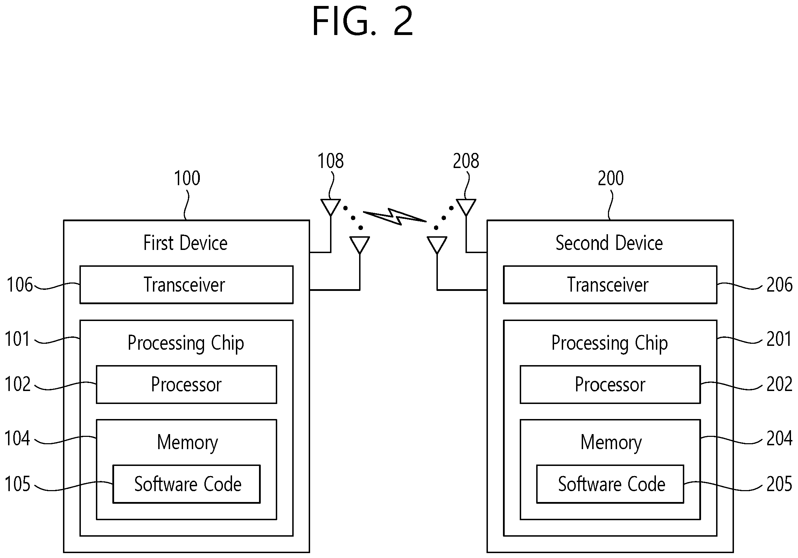

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) (or packet data units) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

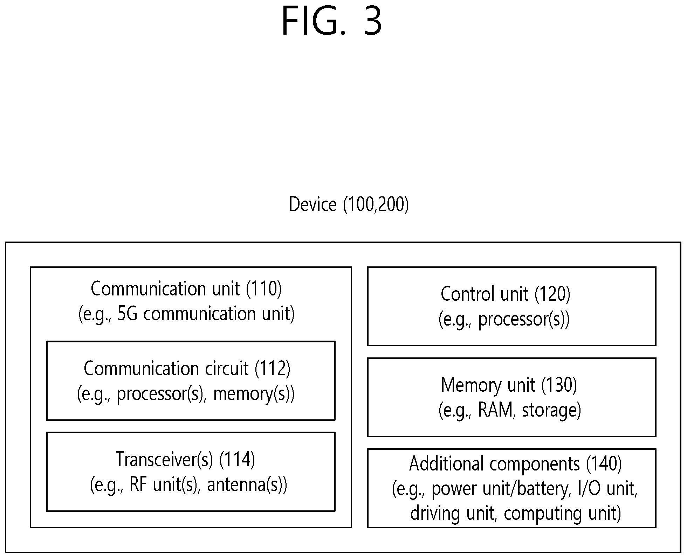

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

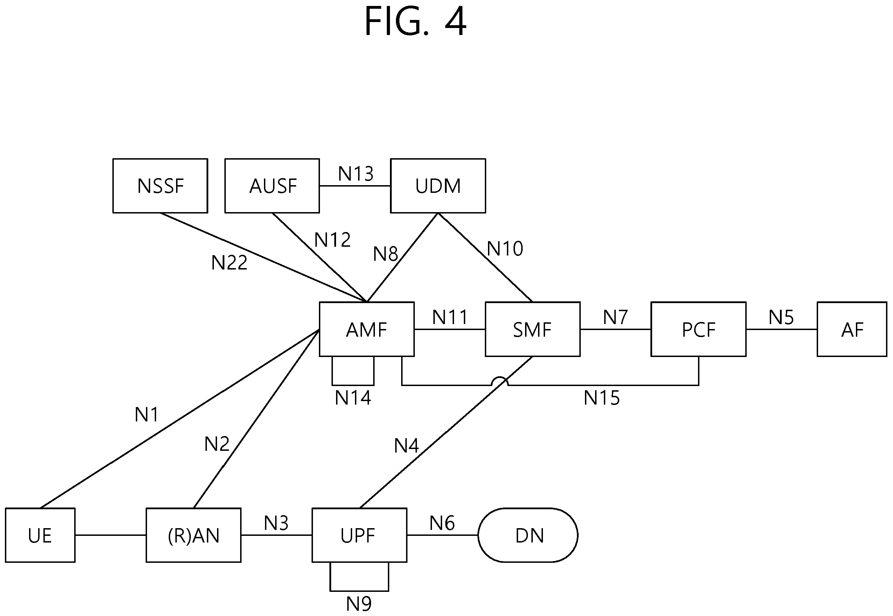

**FIG. 4** **shows an example of 5G system architecture to which implementations of the present disclosure is applied.**

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (SG-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: represents a reference point between PCF and AMF, and a reference point between AMF and PCF of a visited network in a roaming scenario.
- N16: Reference point between two SMFs, (in roaming case between SMF in the visited network and the SMF in the home network).
- N22: Reference point between the AMF and the NSSF.
- N30: Reference point between PCF and NEF.
- N33: Reference point between AF and NEF.

In some cases, a couple of NFs may need to be associated with each other to serve a UE.

For reference, in FIG. 4, an AF by a third party other than an operator may be connected to SGC through NEF.

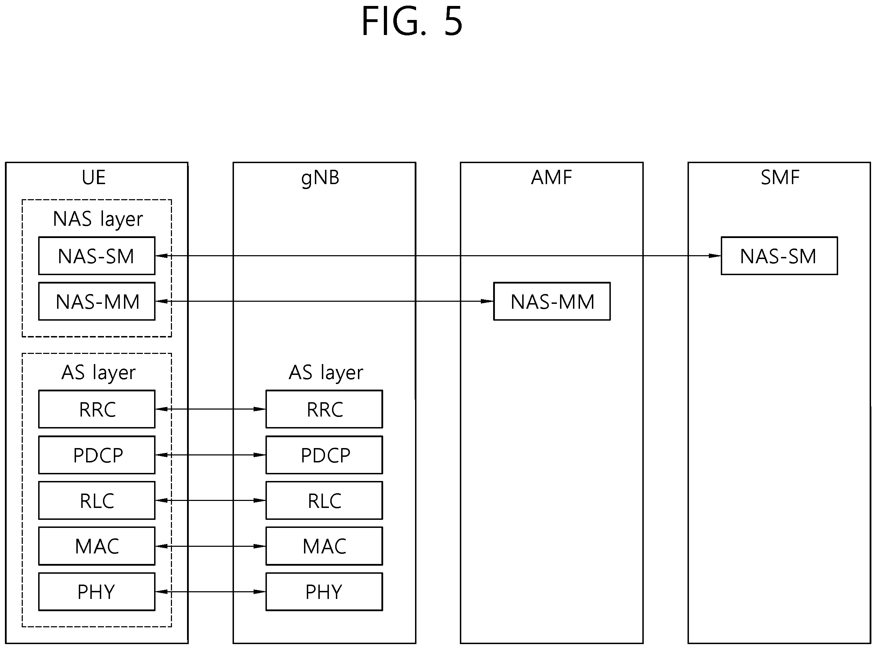

**FIG. 5** **is another exemplary diagram showing a structure of a radio interface protocol between a UE and a gNB.**

The radio interface protocol is based on the 3GPP radio access network standard. The radio interface protocol is horizontally composed of a physical layer, a data link layer, and a network layer, and is vertically divided into a user plane for transmission of data information and a control plane for transfer of control signal (signaling).

The protocol layers may be divided into L1 (first layer), L2 (second layer), and L3 layer (third layer) based on the lower three layers of the open system interconnection (OSI) reference model widely known in communication systems.

Hereinafter, each layer of the radio protocol will be described.

The first layer, the physical layer, provides an information transfer service using a physical channel. The physical layer is connected to an upper medium access control layer through a transport channel, and data between the medium access control layer and the physical layer is transmitted through the transport channel. In addition, data is transmitted between different physical layers, that is, between the physical layers of a transmitting side and a receiving side through a physical channel.

The second layer includes a medium access control (MAC) layer, a radio link control (RLC) layer, and a packet data convergence protocol (PDCP) layer.

The third layer includes radio resource control (hereinafter abbreviated as RRC). The RRC layer is defined only in the control plane and is in charge of control of logical channels, transport channels, and physical channels related to configuration, reconfiguration and release of radio bearers. In this case, RB refers to a service provided by the second layer for data transfer between the UE and the E-UTRAN.

The NAS layer performs functions such as connection management (session management) and mobility management.

The NAS layer is divided into a NAS entity for mobility management (MM) and a NAS entity for session management (SM).
1) NAS entity for MM provides the following functions in general.

NAS procedures related to AMF include the following.
- Registration management and access management procedures. AMF supports the following functions.
- Secure NAS signal connection between UE and AMF (integrity protection, encryption)

2) The NAS entity for SM performs session management between the UE and the SMF.

The SM signaling message is processed, that is, generated and processed, at an NAS-SM layer of the UE and SMF. The contents of the SM signaling message are not interpreted by the AMF.
- In the case of SM signaling transmission,
- The NAS entity for the MM creates a NAS-MM message that derives how and where to deliver an SM signaling message through a security header representing the NAS transmission of SM signaling and additional information on a received NAS-MM.
- Upon receiving SM signaling, the NAS entity for the SM performs an integrity check of the NAS-MM message, analyzes additional information, and derives a method and place to derive the SM signaling message.

Meanwhile, in FIG. 5, the RRC layer, the RLC layer, the MAC layer, and the PHY layer located below the NAS layer are collectively referred to as an access stratum (AS).

A network system (i.e., SGC) for next-generation mobile communication (i.e., 5G) also supports non-3GPP access. An example of the non-3GPP access is typically a WLAN access. The WLAN access may include both a trusted WLAN and an untrusted WLAN.

In the system for 5G, AMF performs registration management (RM: Registration Management) and connection management (CM: Connection Management) for 3GPP access as well as non-3GPP access.

A Multi-Access (MA) PDU session using both 3GPP access and non-3GPP access may be used.

The MA PDU session is a PDU session that can be serviced simultaneously with 3GPP access and non-3GPP access using one PDU session.

### <Registration Procedure>

A registration procedure is described. Section 4.2.2.2 of 3GPP TS 23.502 V16.3.0 (2019-12) can be referred.

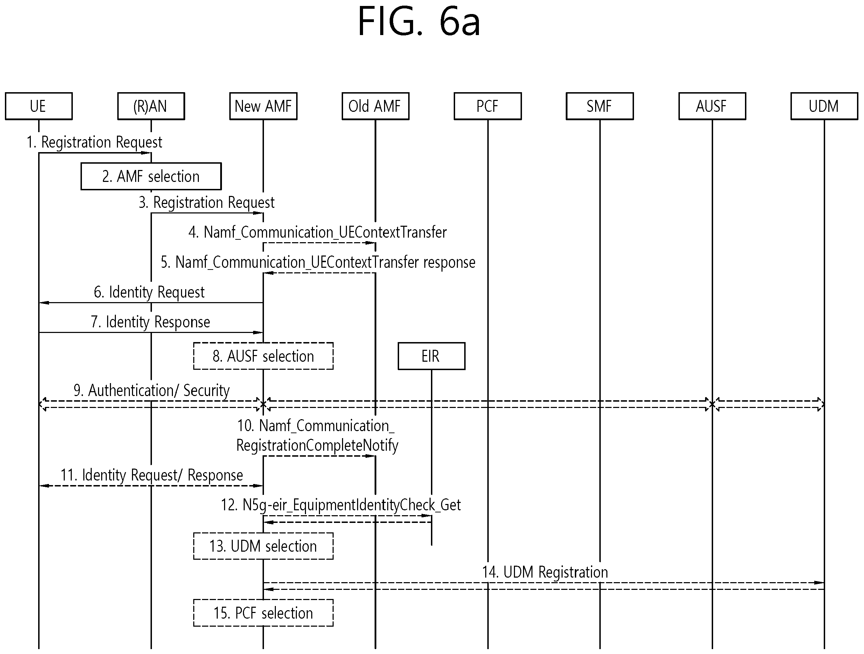

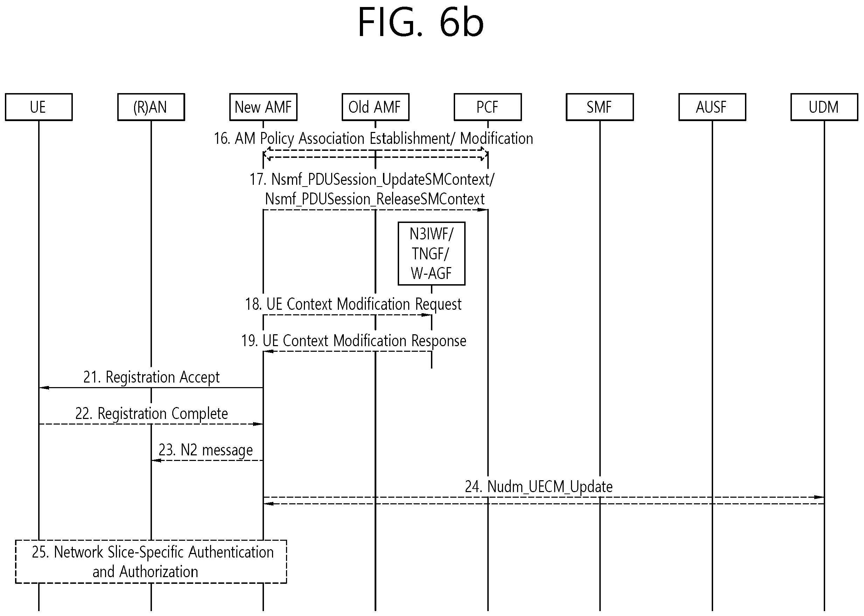

FIGS. 6a and 6b show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 6a and 6b applies on all these registration procedures, but the periodic registration update need not include all parameters that are used in other registration cases.

The general registration procedure in FIGS. 6a and 6b is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 6a are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF transmitting the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF transmitting an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the NSg-eir _EquipmentIdentityCheck_Get service operation.

Now, procedures of FIG. 6b, which follow the procedures of FIG. 6a, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may transmit a UE Context Modification Request to the N3IWF/TNGF/W-AGF.

(19) Step 19: The N3IWF/TNGF/W-AGF may transmit a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF transmits a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall transmit the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may transmit a Registration Complete message to the new AMF when it has successfully updated itself.

The UE may transmit a Registration Complete message to the new AMF to acknowledge if a new 5G-GUTI was assigned.

(23) Step 23: For registration over 3GPP Access, if the new AMF does not release the signaling connection, the new AMF may transmit the RRC Inactive Assistance Information to the NG-RAN. For registration over non-3GPP Access, if the UE is also in CM-CONNECTED state on 3GPP access, the new AMF may transmit the RRC Inactive Assistance Information to the NG-RAN.

(24) Step 24: The new AMF may perform information update towards the UDM.

(25) Step 25: The UE may execute Network Slice-Specific Authentication and Authorization procedure.

### < UE-to-Network Relay >

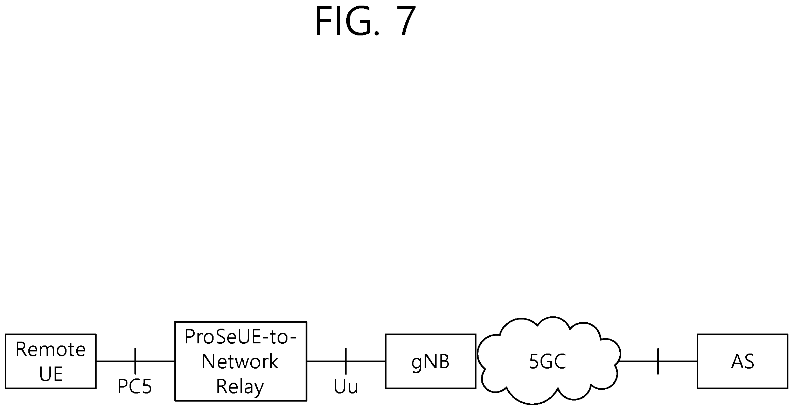

**FIG. 7** **shows an example of the architecture of a UE-to-Network Relay.**

Referring to FIG. 7, UE-to-Network Relay supports the network connection of the Remote UE.

The PCS link is the interface between the UE and the UE-to-network relay. The Uu link is the interface between the UE-to-network relay and the base station.

If the UE has established a PCS link with the UE-to-network relay, the UE is considered as a remote UE.

The 5G ProSe UE-to-Network Relay entity (refer to 5G ProSe UE-to-Network Relay in FIG. 7) may provide a function for supporting network connectivity for Remote UEs. UE-to-Network Relay may be used for both public safety services and commercial services (eg, interactive services).

When a UE (eg Remote UE) has successfully established a PCS link to a 5G ProSe UE-to-Network Relay, the UE (eg Remote UE) will be considered a Remote UE for a specific 5G ProSe UE-to-Network Relay. The Remote UE may be located within NG-RAN coverage or may be located outside NG-RAN coverage.

5G ProSe UE-to-Network Relay may relay unicast traffic (UL and DL traffic) between the Remote UE and the network. The 5G ProSe UE-to-Network Relay shall provide a general function to relay all IP traffic.

For unicast traffic between Remote UEs and 5G ProSe UE-to-Network Relays, One-to-one Direct Communication may be used.

### II. Technology and procedures related to the present disclosure of the present specification

The following describes techniques and procedures related to the present disclosure of the specification. Also described below are examples of problems that the present disclosure seeks to solve.

Proposals to support Proximity based Services (ProSe) in 5GS are being discussed. This includes receiving network connectivity services via UE-to-Network Relay, which may be Layer-2 UE-to-Network Relay or Layer-3 UE-to-Network Relay.

In the prior art, a UE may be provided with connectivity services from a network in a manner such as the example below.
1) The UE may be provided with services from the network directly for Protocol Data Unit (PDU) sessions without going through UE-to-Network Relay (this is called Direct Network Communication or Direct Path).
2) The UE may be provided with services from the network indirectly for PDU sessions via UE-to-Network Relay (this is called Indirect Network Communication or Indirect Path).

In particular, the following scenarios are not considered possible in the prior art:
i) the UE is simultaneously provided with network connectivity services through one or more Layer-2 UE-to-Network Relays, while the UE is provided with network connectivity services through a direct path.
ii) The UE is provided with network connectivity services via two or more Layer-2 UE-to-Network Relays.

This is because, even if the UE receives network connectivity services via Layer-2 UE-to-Network Relay, the UE performs RRC operations and NAS operations with the NG-RAN and Core network (via Layer-2 UE-to-Network Relay). In the scenarios i) and ii) above, the UE establishes multiple RRC connections and NAS connections via 3GPP access (i.e., Uu interface between the LTE and NG-RAN in the direct path and between Layer-2 UE-to-Network Relay and NG-RAN in the indirect path), which was not allowed in the prior art.

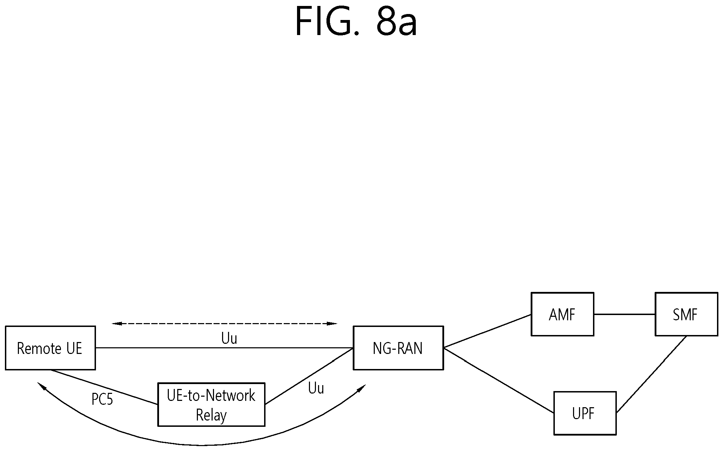

In contrast to the prior art, it is contemplated that the UE receives services from the network over multiple paths. The examples of FIGS. 8a through 8d below illustrate a scenario where a UE receives services from the network over two paths.

The following drawings are intended to illustrate specific embodiments of the present disclosure. The designations of specific devices or the designations of specific signals/messages/fields shown in the drawings are for illustrative purposes only, and the technical features of the present specification are not limited to the specific designations used in the drawings below.

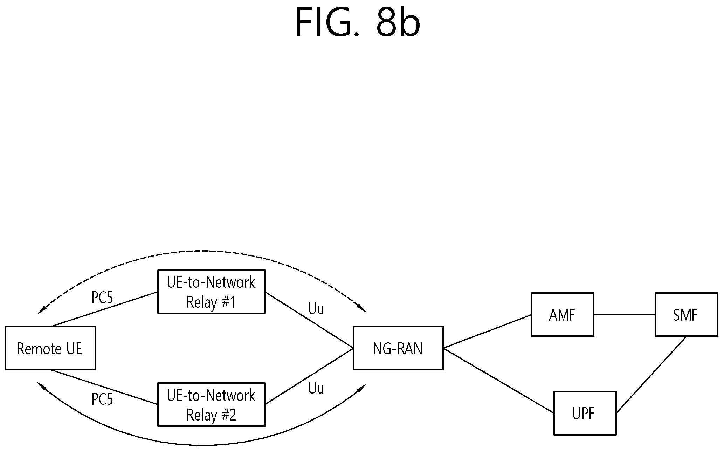

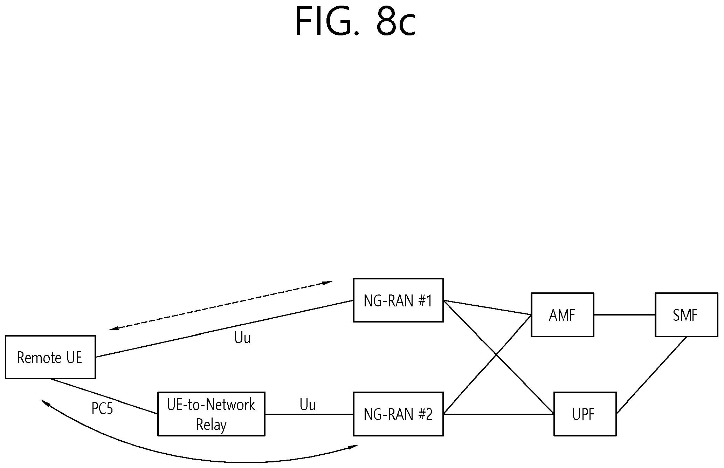

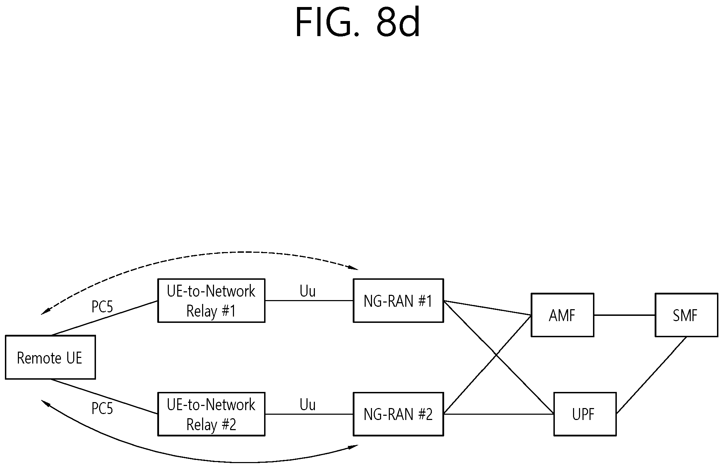

**FIG. 8a** **illustrates a first example where a UE is provided with serveces over two paths.** **FIG. 8b** **illustrates a second example where the UE is provided with serveces via two paths.** **FIG. 8c** **illustrates a third example where the UE is provided with serveces via two paths.** **FIG. 8d** **illustrates a fourth example where the UE is provided with serveces via two paths.**

In the example of FIG. 8a, a UE may receive services from the network via a direct path and an indirect path. In this case, the paths may be serviced over the same NG-RAN.

In the example of FIG. 8b, the LTE may receive services from the network via two different indirect paths. In this case, the paths may be serviced over the same NG-RAN.

In the example of FIG. 8c, the UE may receive services from the network via a direct path and an indirect path. In this case, the paths may be serviced by different NG-RANs.

In FIG. 8d, the UE may receive services from the network via two different indirect paths. In this case, the paths may be serviced by different NG-RANs.

As shown in the examples in FIGS. 8a through 8d, for all paths, it is assumed that the connection/communication between the UE and the network along the path is 3GPP access (i.e., Uu interface), i.e., for direct paths, the connection/communication between the UE and the network may be established via 3GPP access. For the indirect path, the connection/communication between the UE-to-Network Relay and the network may be established via 3GPP access.

While the examples of FIGS. 8a through 8b illustrate two paths, they are illustrative only, and the scope of the multi-paht described in the present disclosure of the present specification may extend to three or more paths.

The examples of FIGS. 8a through 8d depict UEs being served over the same PLMN. In other cases, the UEs may be served by paths through different PLMNs.

A LTE using these multiple paths may be assumed to be supported for both the non-roaming and roaming cases.

In the present specification, an indirect path is assumed to be the path by which the UE connects to the network via Layer-2 UE-to-Network Relay by default, unless otherwise noted.

According to the prior art 5GS technology, in order to communicate with a UE in CM-IDLE state (e.g. to transmit N1 signaling to the UE, to transmit mobile-terminated SMS to the UE, to transmit mobile-terminated (or DL) data to the UE), the AMF may perform paging, i.e. the AMF may perform paging to bring a UE in RRC_IDLE/CM-IDLE state to RRC_CONNECTED/CM-CONNECTED state. The paging performed by the AMF may be referred to as CN paging and the detailed behavior may be found in clause 4.2.3.3 (Network Triggered Service Request) of TS 23.502 V16.9.0.

The paging messages transmitted by the AMF to the NG-RAN for paging UEs are defined in TS 38.413 V16.6.0 "Section 9.2.4 paging messages", see below.

The paging message is transmitted by the AMF and may be used to page the UE in one or more tracking areas. The AMF transmits the paging message to the NG-RAN node.

**[Table 1]**

| IE/Group Name | Presenc e | Range | IE type and reference | Semantics description | Criticalit y | Assign ed Critica lity |
|---|---|---|---|---|---|---|
| Message Type | M | | 9.3.1.1 | | YES | ignore |
| UE Paging Identity | M | | 9.3.3.18 | | YES | ignore |
| Paging DRX | O | | 9.3.1.90 | | YES | ignore |
| TAI List for Paging | | *1* | | | YES | ignore |
| >TAI List for Paging Item | | *1..*<*max noofTAIf orPagin g*> | | | - | |
| >>TAI | M | | 9.3.3.11 | | - | |
| Paging Priority | O | | 9.3.1.78 | | YES | ignore |
| UE Radio Capability for Paging | O | | 9.3.1.68 | | YES | ignore |
| Paging Origin | O | | 9.3.3.22 | | YES | ignore |
| Assistance Data for Paging | O | | 9.3.1.69 | | YES | ignore |
| NB-IoT Paging eDRX Information | O | | 9.3.1.138 | | YES | ignore |
| NB-IoT Paging DRX | O | | 9.3.1.139 | If this IE is present, the *Paging DRX* IE is ignored. | YES | ignore |
| Enhanced Coverage Restriction | O | | 9.3.1.140 | | YES | ignore |
| WUS Assistance Information | O | | 9.3.1.143 | | YES | ignore |
| Paging eDRX Information | O | | 9.3.1.154 | | YES | ignore |
| CE-mode-B Restricted | O | | 9.3.1.155 | | YES | ignore |

The IE type and reference in Table 1 may refer to a section number in TS 38.413 V16.6.0. For a description of each item in the examples in Table 1, see TS 38.413 V16.6.0 "Section 9.2.4 paging messages".

Note that the maximum number of TAIs for paging may be 16. The maximum number of TAIs for paging may be defined as maxnoofTAIforPaging.

This may be an Information Element (IE) as defined in TS 38.413 V16.6.0 Section 9.3.3.18 UE paging Identity.

**[Table 2]**

| IE/Group Name | Presence | Range | IE type and reference | Semantics description |
|---|---|---|---|---|
| CHOICE *UE Paging Identity* | M | | | |
| *>5G-S-TMSI* | | | | |
| >>5G-S-TMSI | M | | 9.3.3.20 | |

The example IEs in Table 2 represent the identities to which the UE is paged. The IE type and reference in Table 2 may refer to a section number in TS 38.413 V16.6.0.

The following may be an IE as defined in TS 38.413 V16.6.0 Section 9.3.3.20 5G-S-TMSI.

**[Table 3]**

| IE/Group Name | Presence | Range | IE type and reference | Semantics description |
|---|---|---|---|---|
| AMF Set ID | M | | 9.3.3.12 | |
| AMF Pointer | M | | 9.3.3.19 | |
| 5G-TMSI | M | | OCTET STRING (SIZE(4)) | 5G-TMSI is unique within the AMF that allocated it. |

The IEs defined in Table 3 may be used to hide a subscriber's identity for security reasons.

When the NG-RAN receives the above paging message from the AMF, the NG-RAN may perform paging to the UE. In this case, the paging message transmitted by the NG-RAN (in particular the NR base station gNB) may refer to the following as defined in TS 38.331 V16.3.0. Paging messages may be used for notification of one or more UEs. Paging messages may be transmitted from the network to the UE.

Paging messages may also be defined, for example, as shown in Table 4 below.

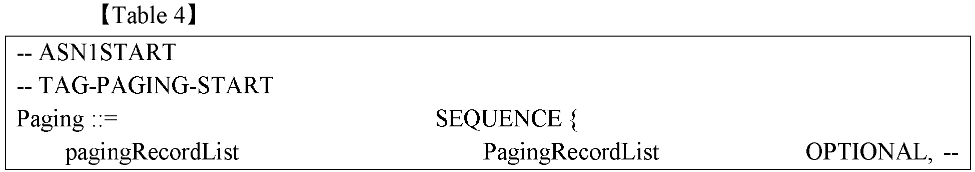

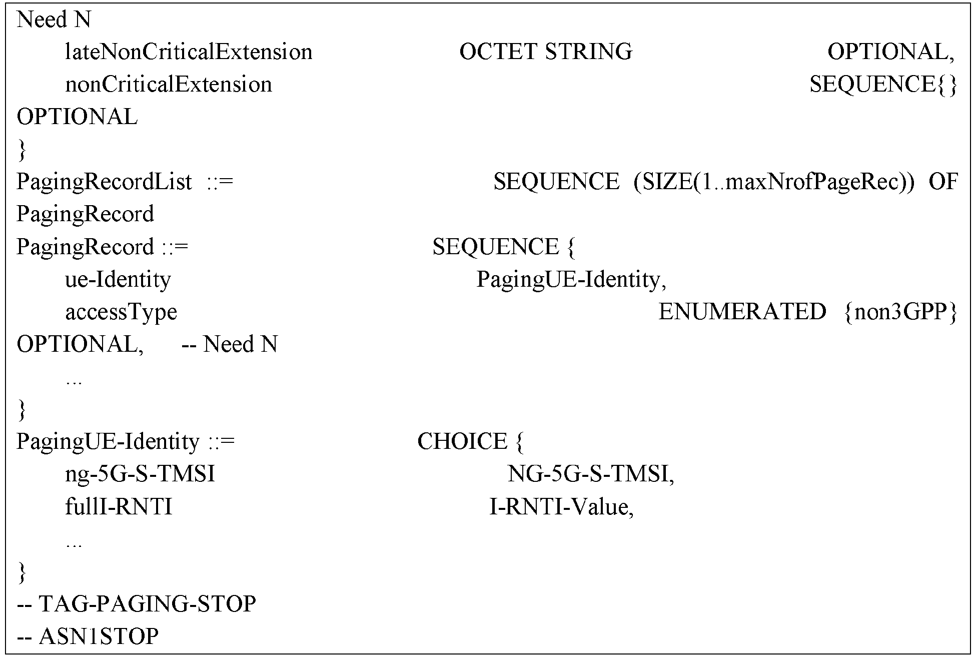

For the example in Table 4, the specific information within the paging message may be found in Section 6.2.2. paging message of 3GPP TS 38.331 V16.3.1.

In the example in Table 4, the PagingRecord field may include an accessType. If the paging message is related to a non-3GPP access, the accessType may be set to a non-3GPP access value and included in the PagingRecord field. This (i.e., accessType set to a non-3GPP access value) may indicate, for example, that the paging is due to the occurrence of data or signaling for a PDU session associated with the non-3GPP access.

In the example in Table 4, the IE NG-SG-S-TMSI may include the 5G S-Temporary Mobile Subscription Identifier (5G-S-TMSI). The NG-SG-S-TMSI may be used to uniquely identify the UE within the tracking area by the temporary UE ID provided by the 5GC.

In the example in Table 4, the IE I-RNTI-Value may be used to identify the aborted/reserved UE context of the UE in RRC_INACTIVE.

For CN paging performed by an AMF, the AMF may perform paging using a 5G-S-TMSI among the UE IDs. The 5G-S-TMSI is part of the 5G-GUTI assigned to the UE by the AMF serving the UE and consists of the AMF Set ID, AMF Pointer and 5G-TMSI. For reference, below is an example of a 5G-GUTI as defined in TS 23.003 V16.5.0.
<5G-GUTI> = <GUAMI><SG-TMSI>,
where <GUAMI> = <MCC><MNC><AMF Identifier>
and <AMF Identifier> = <AMF Region ID><AMF Set ID><AMF Pointer>

Then, in order for the NG-RAN to communicate with the UE in the RRC_Inactive state (e.g., for the NG-RAN to transmit DL data or DL signaling to the UE), the NG-RAN may perform paging. The paging performed by the NG-RAN may be referred to as RAN paging, i.e. the NG-RAN may perform paging to bring a UE in RRC_INACTIVE/CM-CONNECTED state to RRC_CONNECTED/CM-CONNECTED state.

The NG-RAN may perform RAN paging using the paging message defined in TS 38.331 V16.3.0 above. In this case, the NG-RAN may perform paging using the Inactive Radio Network Temporary Identifier (I-RNTI) among the UE IDs. The I-RNTI is an ID assigned by the NG-RAN to the UE, which may be an ID assigned to identify the context of the UE in the RRC_Inactive state.

The NG-RAN performing CN paging or RAN paging may transmit a paging message to the UE's PO (Paging Occasion). In this case, a UE in RRC_Idle state or RRC_Inactive state may receive paging by monitoring its PO. The UE's PO is determined based on the 5G-S-TMSI, see TS 38.304 V16.3.0 (if Uu is NR), TS 36.304 V16.3.0 (if Uu is E-UTRA) for details.

The behavior of the NG-RAN and UE with respect to paging may be found in existing TS 38.300 V16.4.0, TS 38.331 V16.3.0, TS 38.304 V16.3.0, TS 36.331 V16.3.0, TS 36.304 V16.3.0, etc.

In contrast to RAN paging, CN paging may be referred to simply as paging. Also, paging may be used as an umbrella term to include both CN paging and RAN paging.

In the prior art, when a UE (i.e., a Remote UE) receives network connectivity services through a Layer-2 UE-to-Network Relay, a behavior is defined in which the Layer-2 UE-to-Network Relay receives paging messages on behalf of the UE, and the Layer-2 UE-to-Network Relay forwards the paging messages to the UE. As a result, the Layer-2 UE-to-Network Relay needs to know the identity information of the Remote UE in order to receive paging on behalf of the Remote UE it serves. To receive CN paging for a Remote UE, the Layer-2 UE-to-Network Relay needs to know the UE's 5G-S-TMSI (or 5G-GUTI). Then, to receive RAN paging for the Remote UE, the Layer-2 UE-to-Network Relay needs to know the UE's 5G-S-TMSI (or SG-GUTI) and I-RNTI.

Assuming that a UE using multi-path performs a separate registration procedure for each of the plurality of paths, the UE performs the registration procedure over the direct path in the case of FIGS. 8a and 8c and over the indirect path in the case of FIG. 8b. In this case, unlike as shown in FIGS. 8a and 8c, in the registration procedure for each path, different AMFs may be selected so that the UE's paths are each served by different AMFs, i.e., each path may be served by the same AMF or different AMFs. In any case, for each path, the AMF serving it may manage/maintain the CM state of the UE, and for CN paging, the AMF performs CN paging separately for each path. Therefore, the UE should receive CN paging messages directly for direct paths, and the UE-to-Network Relay should receive CN paging messages on behalf of the UE for indirect paths.

In the scenario of FIGS. 8b and 8d, the UE may perform the registration procedure via each indirect path. However, unlike in FIGS. 8b and 8d, when each registration procedure is performed, different AMFs may be selected and the UE's paths may each be served by different AMFs, i.e., each path may be served by the same AMF or different AMFs. In any case, for each path, the AMF serving it will manage/maintain the CM state of the UE, and for CN paging, the AMF will perform CN paging separately for each path. Therefore, for each indirect path, the UE-to-Network Relay serving it must receive CN paging on behalf of the UE.

Of course, it is possible to perform paging separately for each path as described above. However, the present specification proposes a more efficient way to perform paging for UEs using multi-path.

Conventionally, a user equipment (UE) does not communicate over multiple paths within a single access (e.g., 3GPP access or non-3GPP access). In this context, multiple paths may refer to communication paths between the UE and the New Generation Radio Access Network (NG-RAN).

More recently, the UE may be supported to receive services from the network via multiple paths, including paths that go through UE-to-Network Relay. The UE may perform a registration procedure for each of the multiple paths. The AMF serving each of the multiple paths then manages and/or maintains the UE's Connection Management (CM) state for each of the multiple paths.

Conventionally, there has been no effective way to support communications based on multiple paths between the UE and the network.

For example, in this situation, if the UE is in the RRC_IDLE state and/or CM-IDLE state, when the AMF transmits a paging message to the UE, a separate paging message must be transmitted for each of the multiple paths. Transmitting a paging message for each of the multiple paths may result in wasted radio resources.

For example, one of the many paths may be an indirect path that the UE has formed with the NG-RAN through UE-to-Network Relay. Thus, a UE may have both direct and indirect paths directly connected to the NG-RAN. In this case, the AMF needs to transmit paging messages to the UE over each of the direct and indirect paths. The problem with this is that both the UE and the UE-to-Network Relay have to perform actions to receive the paging message, resulting in power consumption.

The dpersent disclosure of the present specificaiton below proposes a method to address these issues.

### III. The present disclosure of the present specification

The present disclosure may be implemented in one or more combinations (e.g., combinations that include at least one of those described below). While each of the drawings illustrates an embodiment of each disclosure, the embodiments of the drawings may be implemented in combination with each other.

The present disclosure may comprise any combination of one or more of the actions/compositions/steps described below. The following methods described below may be performed or used combinatorially or complementarily.

In the present disclosure, the following methods are disclosed to address the various problems described above. The following methods may be performed or used combinatorially or complementarily.

In various examples of the present disclosure, efficient paging methods for UEs using multi-path may be described.

Efficient paging schemes for UEs using multi-path in accordance with various examples of the present disclosure may comprise a combination of one or more of the actions/configurations/steps described below.

In various examples of the present disclosure, efficient paging schemes for UEs using multi-path assume that the UE receives network connectivity services via a Layer-2 UE-to-Network Relay for indirect network communication. However, this is only an example, and the scope of the present disclosure is not limited thereby. For example, the present disclosure of various examples of the present disclosure may be extended to the case where the Indirect Network Communication receives network connectivity services via Layer-3 UE-to-Network Relay.

As previously mentioned in "II. Techniques and procedures related to the present disclosure", it is assumed that a path is a path through an NG-RAN (which may be a gNB only, or both a gNB and an ng-eNB). For example, path may refer to a path formed for communication between the UE and the NG-RAN. For example, the UE may be directly connected to the NG-RAN, in which case a direct path is the to be formed. In another example, the UE may be indirectly connected to the NG-RAN via a UE to Network Relay, in which case an indirect path is formed. However, these are only examples, and the scope of the present disclosure is not limited accordingly. For example, the schemes described in the various examples of the present disclosure may be extended to paths via non-3GPP access.

For indirect paths, the contents of the present specification specification may apply not only to one-hop cases (i.e., where the UE (or Remote UE) receives service from the network through a single UE-to-Network Relay), but also to multi-hop cases (i.e., where the UE (or Remote UE) receives service from the network through multiple UE-to-Network Relays).

According to the present specification, a path may refer to a communication path, a routing path, a connection path, and the like. More specifically, a path may refer to a path used by a UE to communicate with other UE(s) and/or server(s) and/or to transmit or receive data. These paths may be divided into networked paths and non-networked paths. The former may include Uu interfaces (or interfaces used to communicate with the base station), while the latter may include only PCS interfaces (or interfaces used to communicate directly between UEs, without going through the network). The path over the network may take one of two forms, as described below. A UE may use a path through the network to receive services from the network.
- Direct network communication path: A path to communicate over the network, where there is no UE-to-Network Relay between the UE and the 5G network. For the direct network communication path, the UE may perform communication over the network based on the Uu interface. In the present specification, the direct network communication path is also referred to as direct network path, direct path, and direct path.
- Indirect network communication path: A path for communicating over the network, which is either a path using UE-to-network relay between the UE and the 5G network or a path through UE-to-network relay between the UE and the 5G network. For the indirect network communication path, the UE may communicate over the network based on a combination of the Uu interface and the PCS interface. If there are multiple UE-to-network relays between the UE and the 5G network (i.e., multi-hop rather than one-hop), multiple PCS interfaces may be included in the indirect network communication path. In the present specification, indirect network communication paths are also referred to as indirect network paths, indirect paths, and indirect paths.

In the above, the 5G network may include one or more of NG-RAN, 5G Core Network.

Multi-path (or Multiple paths) may mean using two or more paths through the network by a UE to communicate over the network. Such a multi-path may be considered to include one or more indirect network communication paths. For example, a multi-path may consist of one direct network communication path and one indirect network communication path. In another example, a multi-path may consist of two indirect network communication paths. In this case, each indirect network communication path may go through a different UE-to-Network Relay. By allowing the UE to communicate over a multi-path, the effect of improving reliability, data rate (or throughput) may be achieved.

In the present specification, the terms user equipment (UE) and terminal may be used interchangeably. Also, UE-to-Network Relay, ProSe UE-to-Network Relay, Relay, Relay UE, UE-NW Relay, 5G ProSe UE-to-Network Relay, 5G ProSe UE-to-NW Relay, 5G ProSe UE-to-Network Relay UE, etc. may be used interchangeably. In addition, the terms Remote UE, 5G Remote UE, etc. may be used interchangeably.

In the various examples of the present disclosure of the present specification, the focus is on what is proposed by the present disclosure of the present specification as opposed to the prior art, and descriptions of the prior art may be omitted. Reference is made primarily to TS 23.304 V0.0.0 for behavior and procedures related to Layer-2 UE-to-Network Relay.

Hereinafter, the present disclosure will be described with reference to a first example to seventh example of the present disclosure. The first through seventh examples of the present disclosure may be implemented in combination. Of note, the seventh example of the present disclosure may represent a specific embodiment based on a combination of at least one of the first example to the sixth example of the present disclosure.

### 1. The first example of the present disclosure

The first example of the present disclosure describes an example of performing CN paging over one of the multiple paths of the UE. For example, the AMF may perform CN paging over only one of the multiple paths of the UE.

Through a combination of one or more of the behaviors/configurations/steps in the various examples below, the AMF may perform CN paging only over one of the following paths: the path used by the UE or the path formed by the UE with the network.

### 1-1. The first example of the first example of the present disclosure

The first example of the the first example of the present disclosure describes an example where a single AMF manages multiple paths of a UE in a consolidated manner.

After the UE has formed one path with the network, the UE may form and/or add additional paths. At this time, the UE may transmit RRC messages to form and/or add additional paths. The UE may include in the RRC message information about the serving AMF on the previously formed path (which may be information that may be used to identify the AMF, such as a 5G-GUTI assigned/provided by this AMF). The UE may ensure that the same AMF is selected by transmitting an RRC message to the NG-RAN including information about the serving AMF on a previously formed path. This may be applicable if the paths are formed over the same PLMN (which may include an EPLMN).

An AMF that ends up serving multiple paths for a single UE may take one or more of the following actions. This may cause the UE to assume that it is managing the same information or information in the same way as the AMF. Depending on the behavior below, the AMF may be considered to manage the UE's Mobility Management (MM) or MM context or UE context or Registration or Registration information or NAS related information or NAS context in a unified manner:
I) The AMF may manage a single 5G-GUTI for a UE. For example, the AMF may assign and provide a common 5G-GUTI for multiple paths of a UE.
   Whenever a UE adds a new path, the AMF may assign and provide a new common 5G-GUTI. Alternatively, for a newly added path by a UE, the AMF may use the 5G-GUTI previously assigned to the UE.
II) The AMF may manage one Registration Area for a UE, i.e., the AMF may allocate and provide a common Registration Area for multiple paths of a UE.
   When a UE adds a new path, the AMF may assign and provide a new common registration area, or it may use the registration area already assigned to the UE.
   The assignment of the registration area may be related to which cells the UE forms/adds new paths. Therefore, previously assigned registration areas may be updated or remain unchanged.
III) The AMF may manage the CM state for the UE.
   III-1) The AMF may manage a single CM state for the UE, i.e., the AMF may manage a common or consolidated form of CM state for multiple paths of the UE.
   III-2) The AMF may manage a separate CM state for each path of the UE.
   III-3) The AMF may manage the CM state for each path of the UE as sub-CM states, while managing a unifid form of the main-CM state for the entire path of the UE. For example, if all sub-CM states are CM-IDLE, the main-CM state may be managed as CM-IDLE.

For path formation and path addition with the above networks, the UE may use one or more of the following procedures and/or messages. These procedures and/or messages may use existing procedures/messages, extend existing procedures/messages, or new procedures/messages may be defined and used:
- Establish RRC connection with NG-RAN
- Resume RRC connection with NG-RAN
- Register with SGC (may be initial registration or registration update)
- Request service from SGC
- Resume connection with SGC
- Add path to NG-RAN
- Add path to SGC

When the UE performs the action of adding a path (i.e., starting from the second path), the UE may explicitly or implicitly provide information to the NG-RAN and/or AMF indicating that a path is being added.

When performing the operation of forming or adding a path with the network, the UE may provide the network with one or more of the following information: information about whether the UE is capable of forming/using a multi-path, information about whether the UE wishes to form/use a multi-path, and information about whether the UE supports the efficient CN paging scheme described in the present disclosure (i.e., an integrated CN paging scheme). For example, the UE may provide such information to the AMF, and in addition, the UE may provide such information to the NG-RAN.

Further, when performing the operation of forming or adding a path with the UE, the AMF may provide the UE with one or more of the following information: information about whether the AMF may support the formation of a multi-path; information about whether the AMF supports the efficient CN paging scheme described in the present disclosure of the present specification (i.e., an integrated CN paging scheme).

The UE and the AMF may manage and/or store path identification information for the UE's paths. The path identification information shall enable identification of which path is one of the UE's paths. The path identification information may explicitly, implicitly or implicitly include information about one or more of the following paths. The path identification information may also represent each of the following information separately or in an integrated form. In addition, the PATH identification information may be deemed to be the same information as any of the information below:
A) path number (sequence/serial number)
B) path ID (identifier)
C) order of formation of the path
D) path type (information about whether the path is a direct or indirect path)
E) priority of the path
F) preference of the path
G) whether the path is the main path or not.
H) UE-to-Network Relay information if path type is indirect path (this may be the identification of the UE-to-Network Relay that connects to the network and Uu)
I) The number of hops (e.g., the number of UE-to-network relays along the path that the UE goes through to connect to the network) if the path type is indirect path.

With respect to the main path, the UE and/or AMF may perform the following example behaviors. For example, the UE and/or AMF may designate one of the UE's paths as the main path (or master path or primary path). Additionally, the UE and/or AMF may designate a path that is not the main path as a sub path (or secondary path or additional path). For example, if a direct path exists, it may or may not always be designated as the main path. As another example, the first path formed, or the path that was formed earlier, may be designated as the main path. The main path/sub path may also change as path(s) are added, changed, or freed/removed.

The UE may also perform Registration Update actions over the main path. For example, the UE may transmit a Registration Request message over the main path. In addition to operations related to the registration process, the UE and AMF may also perform NAS message exchange over the main path.

Path identification information may be assigned/specified/determined for any path formed/added by the UE.

Alternatively, the UE and/or AMF may not allocate/assign/determine path identification information for direct paths, but only for indirect paths.

Alternatively, the UE and/or AMF may not assign/assign/determine path identification information for the first path formed, but only for the second and subsequent paths formed.

Alternatively, the UE and/or AMF may not assign/assign/determine path identification information for the first formed path at first, but when a second path is formed/added, the UE and/or AMF may assign/assign/determine path identification information for the second path as well as the first formed path.

Note that the UE may provide the path identification information to the AMF after determining the path identification information. Alternatively, the AMF may provide the path identification information to the UE after determining the path identification information. If the UE determines and provides the path identification information, the UE may include the path identification information in an RRC message and transmit the RRC message to the NG-RAN. The NG-RAN may then provide the path identification information to the AMF by including it in an N2 message, or the UE may provide the path identification information to the AMF by including it in a NAS message.

The UE or AMF may determine the path identification information based on various information (e.g., it may be one or more of A) to I) above and/or other information). For example, the various information (e.g., which may be one or more of A) to I) above and/or other information) that the UE or AMF needs to determine the path identification information may be based on information/policies set by itself, information provided by the other party (provided by the UE if determined by the AMF), information provided by the NG-RAN, information provided by the UE-to-Network Relay in the case of an indirect path, information provided by another NF, subscriber information, etc.

When path identification information changes (e.g., due to new paths being added or existing paths being released/removed), the UE and AMF may synchronize information about path identification information with each other.

The path identification information may be exchanged between the UE and the AMF when path formation, path addition, path change, and path release/removal operations are performed between the UE and the network. When a path is changed, both the identification information for the path before the change and the identification information for the path after the change may be exchanged.

Depending on how path identification information is defined, the UE and AMF may determine the path identification information themselves.

The UE and AMF may store/manage the path identification information of the path associated with the PDU Session. Accordingly, when a PDU Session is created, the path identification information of the path associated with it may be stored by the UE and AMF. If the path of the PDU Session is changed, i.e. the PDU Session is moved to a different path, the path identification information of the path associated with the PDU Session after the change may be stored in the UE and AMF.

The NG-RAN may also manage and/or store the path identification information of the UE. The SMF may also manage and/or store the path identification information of the path associated with the PDU Session. The SMF may obtain the path identification information from the AMF, and the AMF may notify the SMF of changes in the path (or path identification information) associated with the PDU Session.

Specific examples of path identification information may be the first and second examples of path identification information below.

### a) First example of path identification information

A series of path identification information values are defined and may be used, as shown below.
Path identifier value = 1: means Direct Path
Path identifier value = 2: means Indirect Path#1
Path identifier value = 3: means Indirect Path#2
Path identifier value = 4: means Indirect Path#3
If the UE may only use up to 2 paths, then it may only need up to Indirect Path#2.

For example, for FIGS. 8a and 8c, a Path identification information value = 1 may be used for the direct path and a Path identification information value = 2 may be used for the indirect path. For FIGS. 8b and 8d, a Path identification information value = 2 may be used for one indirect path and a Path identification information value = 3 may be used for the other indirect path.

### b) Second example of path identification information

As shown in the example below, path identification information may be defined and used in the form of a bitmap.

For example, consider a bitmap of 8 bits. In this case, in order from bit 8 to bit 1, "00000001" could be defined as the direct path, "00000010" as indirect path #1, "00000100" as indirect path #2, and "00001000" as indirect path #3.

If the UE may only use up to 2 paths, then it may only need Indirect Path#2.

For example, for FIGS. 8a and 8c, Bit 1 = 1 may be used for the direct path and Bit 2 = 1 may be used for the indirect path. For FIGS. 8b and 8d, Bit 2 = 1 may be used for one indirect path and Bit 3 = 1 may be used for the other indirect path.

If a UE may use more than one path, if a UE uses more than one path and one path is turned off/removed, the path identification information of the other paths may be used unchanged.

### 1-2. The second example of the first example of the present disclosure

The second example of the first example of the present disclosure an example in which a path to perform CN paging is determined and an example in which CN paging is performed.

For multiple paths that form a connection between the UE and the network, or for multiple paths used by the UE, the UE may decide to perform CN paging for only one path. Instead of the UE deciding to perform CN paging, the AMF may decide to perform CN paging for only one of the UE's paths, and the AMF may provide information to the UE about the decision to perform CN paging.

The determination of the path to perform CN paging may also be interpreted as determining the UE to perform CN paging.

The above paths may be paths serviced by the same AMF. Alternatively, the paths may be paths serviced by the same PLMN (which may include an EPLMN).

If it is decided to perform CN paging via the direct path, the UE may perform the paging directly. If it is decided to perform CN paging over an indirect path, the UE may request the UE-to-Network Relay on that path to perform the paging. The above request may be explicit or implicit. The UE-to-Network Relay may obtain paging related information (e.g., one or more of 5G-S-TMSI (or 5G-GUTI), PO information, path identification information, UE's Registration Area information) of the UE for which it needs to perform paging on its behalf from the UE, or it may receive paging related information of the UE from the network. Alternatively, the UE-to-Network Relay may obtain some information from the UE and some information from the network.

If the paging related information of the UE changes, the UE and/or the network may provide the changed information to the UE-to-Network Relay.

The operation of performing CN paging may be for the UE or UE-to-Network Relay to receive a paging message by monitoring for paging in the UE's Paging Occasion (PO). The action of the UE-to-Network Relay performing CN paging for the UE may be to monitor the paging in the UE's PO to receive a paging message, and to forward the received paging message to the UE.

The UE (or Remote UE) may also request the UE-to-Network Relay not to perform paging if it is not required to perform paging.

If the indirect path is multi-hop, the UE-to-Network Relay performing the paging may be the UE-to-Network Relay communicating over the Uu interface with the network on the path (i.e., the most distal UE-to-Network Relay from the UE perspective).

When the UE and/or the AMF determining the path for performing CN paging, one or more of the various criteria/information described below may be considered. For example, the UE and/or AMF may determine a direct path (e.g., UE performing CN paging) or an indirect path (e.g., UE to network Relay performing CN paging) as the path to perform CN paging based on one or more of the various criteria/information listed below. Some of this information may be obtained by the entity (UE or AMF) determining the path to perform CN paging from other entity(s). The following information may be considered in combination with each other, or various other information may be considered:
a) Whether a direct path exists among the paths used by the UE.
   - For example, if a direct path exists among the paths used by the UE, the UE or AMF may decide to perform CN paging over the direct path (i.e., directly by the UE).
b) The order in which the paths used by the UE were formed/generated.
   - For example, the UE or AMF may decide to perform CN paging over the first formed/generated path.
c) The priority or preference of the paths used by the UE.
   - For example, the UE or the AMF may decide to perform CN paging over the path with the highest priority or preference.
d) Whether it is the main path among the paths used by the UE.
   - For example, the UE or AMF may decide to perform CN paging over a path corresponding to the main path.
e) Among the paths used by the UE, the number of hops (i.e., the number of UE-to-network relays on the path) for indirect paths.
   - For example, the UE or AMF may decide to perform CN paging over the path with the smallest hop count among the indirect paths.
f) Among the paths used by the UE, whether the UE's CM state is CM-IDLE state (i.e., the RRC state is RRC_IDLE state) (if the UE's CM state is managed for each path).
   - For example, if a UE uses a direct path and an indirect path, where the direct path is when the UE is in the CM-IDLE state and the indirect path is when the UE is in the CM-CONNECTED state, the UE or AMF may decide to perform CN paging via the direct path.
g) For indirect path, whether the CM state of UE-to-Network Relay is CM-IDLE state (i.e., RRC state is RRC_IDLE state).
   - For example, if a UE uses two indirect paths and the UE-to-network relay on one indirect path is in the CM-CONNECTED state and the UE-to-network relay on the other indirect path is in the CM-IDLE state, the UE or AMF may decide to perform CN paging over the latter indirect path.
h) In case of indirect path, whether the RRC state of UE-to-Network Relay is RRC INACTIVE state.
   - For example, if a UE uses two indirect paths and the UE-to-network relay on one indirect path is in RRC_CONNECTED state and the UE-to-network relay on the other indirect path is in RRC_INACTIVE state, the UE or AMF may decide to perform RAN paging over the latter indirect path.

The timing at which the UE or AMF determines which path to perform CN paging may vary. For example, the point in time at which the UE or AMF determines which path to perform CN paging may be when multiple paths served by the same AMF arise, or when it actually becomes necessary to perform CN paging, or when the UE enters the CM_IDLE state, or when the UE enters the CM_IDLE state for all of the UE's paths, or when the UE enters the CM_IDLE state for one of the UE's paths, etc.

If the path on which paging is performed changes (e.g. because a new path is added, an existing path is released/removed, or one or more of the information in a) to h) above changes) and the path on which paging is performed is an indirect path, the UE or AMF may request the UE-to-Network Relay on the path to perform paging. And if there exists a UE-to-Network Relay that was previously performing paging, the UE or AMF may request this UE-to-Network Relay to stop performing paging.

The AMF may know which of the multiple paths the UE will use to perform the paging. For example, the AMF may know over which path the UE is paging based on information set in the AMF, information communicated to the AMF by the UE, subscriber information of the UE, etc.

When performing CN paging, the AMF may include path identification information in the paging message (i.e., the paging message transmitted to the NG-RAN) indicating the path associated with the PDU session. For example, the AMF may include in the paging message path identification information indicating the path associated with the paging, the path that caused the paging, the path that requires paging, the path that allows the UE to establish/resume a connection with the network (i.e., RRC connection and/or NAS/N1 connection), or if the paging is for a PDU session, the AMF may include in the paging message path identification information indicating the path associated with the PDU session. If paging needs to be performed for multiple paths at the same time, the AMF may include path identification information for all paths that need to be paged. In the NG-RAN, based on the path identification information, the paging may be performed by including the path identification information in the message paging the UE.

If the paging is for a PDU Session, when the AMF receives the message causing the paging (e.g., Namf_Communication_N1N2MessageTransfer) from the SMF, the AMF may determine the path requiring paging by storing path identification information for the path associated with the PDU Session, as described in the first example of the opening example of the present specification. Alternatively, as the SMF stores the path identification information for the paths associated with the PDU Session, the SMF may cause the AMF to determine the paths requiring paging by including the path identification information in the message causing the paging.

The path identification information included by the AMF above may also be included in the paging message transmitted by the NG-RAN.

If the path for which the UE is paging is one of the paths for which paging is required (i.e., one of the paths for which the UE is trying to establish/resume association with the network (i.e., RRC association and/or NAS/N1 association)), the AMF may not include path identification information for the path in the paging message.

In the first example of the first example of the opening disclosure, "III)" previously described examples (e.g., III-1 through III-3) in which the AMF manages the CM state for the UE. Below, for the various examples of "III)" described above, we describe examples of specific behaviors in which the AMF determines whether to perform CN paging:

In case of III-1): If the CM state is CM-IDLE state, the AMF may decide to perform CN paging.

In case of III-2):
> If the path requiring paging is in the CM-IDLE state, the AMF may decide to perform CN paging.
> Only if all the UE's paths are in CM-IDLE state, the AMF may decide to perform CN paging. If there is a path other than the one requiring paging that is in the CM-CONNECTED state, the AMF may decide to transmit the NAS Notification message over this path. The AMF may include in the NAS Notification message the path identification information for the path that requires paging (i.e., the path that requires the UE to establish/resume a connection with the network (i.e., RRC connection and/or NAS/N1 connection)). In the above, a path that is in the CM-CONNECTED state among other paths that require paging may also mean a path that is in the RRC_Connected state (or not in the RRC_Inactive state). The AMF may request the NG-RAN to indicate whether the UE is in the RRC_Inactive state, and the AMF may obtain such information from the NG-RAN to determine whether the UE is in the RRC_Inactive state. This may be applied throughout the present disclosure of the present specification.

In case of III-3):
> If the path requiring paging is in a CM-IDLE state (i.e., the sub-CM state of the path is in a CM-IDLE state), the AMF may decide to perform CN paging.
> Only if all paths of the UE are in CM-IDLE state (i.e., sub-CM state of all paths of the UE are in CM-IDLE state), the AMF may decide to perform CN paging. Therefore, if there is a path other than the path that needs to be paged that is in the CM-CONNECTED state, the AMF may decide to transmit a NAS Notification message through this path. Regarding the behavior of transmitting the NAS Notification message, the matters described in III-2) may be applied.
> If the UE's main-CM state is CM-IDLE, the AMF may decide to perform CN paging. If the UE's main-CM state is not CM-IDLE (or is CM-CONNECTED) and there is a path other than the path requiring paging that is CM-CONNECTED, the AMF may decide to transmit a NAS notification message via this path. Regarding the behavior of transmitting the NAS Notification message, the matters described in III-2) may be applied.

The UE may receive a paging message related to CN paging (or receive a paging message from the UE-to-Network Relay if the UE-to-Network Relay performs the paging). In this case, the UE may determine, based on the path identification information includeed in the paging message (or the absence of path identification information in the paging message), for which path(s) an association with the network (i.e., RRC association and/or NAS/N1 association) should be formed/resumed. Accordingly, an RRC connection/resumption and/or Service Request procedure may be initiated for (or through) the path(s) requiring the formation/resumption of a connection with the network (i.e., an RRC connection and/or NAS/N1 connection) for the path(s) requiring the formation/resumption of a connection with the network (i.e., an RRC connection and/or NAS/N1 connection).

### 1-3. The third example of the first example of the present disclosure

The third example of the first example of the present disclosure describes an example of transmitting a NAS Notification message when the non-3GPP access of the UE is in the CM-CONNECTED state.

It is possible that the UE has also registered with the SGC via the non-3GPP access and the UE is in the CM-CONNECTED state for the non-3GPP access and the UE is in the CM-IDLE state for the 3GPP access. In this case, to enable the UE to establish a connection with the network via the 3GPP access, the AMF may transmit a NAS Notification message (including information indicating that it is for the 3GPP access) via the non-3GPP access. In this case, the AMF may include path identification information in the NAS Notification message, as described in the second example of the first example above.

When the UE receives the NAS Notification message, it may determine, based on the path identification information includeed in the NAS Notification message (or the absence of path identification information in the NAS Notification message), for which path(s) a connection with the network (i.e., an RRC connection and/or a NAS/N1 connection) should be established/resumed. Accordingly, the UE may initiate an RRC connection/resumption and/or Service Request procedure for (or over) the path(s) requiring the formation/resumption of a connection (i.e., RRC connection and/or NAS/N1 connection) with the network.

### 2. The second example of the present disclosure

The second example of the present disclosure describes an example for preventing path from entering the RRC_Inactive state.

For example, the second example of the present disclosure describes an example of behavior that prevents a path from entering the RRC_INACTIVE state when the UE is using multiple paths.

If the UE uses multiple paths, it needs to perform RAN paging for each path if multiple paths are in RRC _INACTIVE state.

In the case of Figure 8a, when the NG-RAN performs RAN paging on each path, the UE and UE-to-Network Relay shall perform paging respectively. For FIG. 8b, when the NG-RAN performs RAN paging on each path, UE-to-Network Relay#1 and UE-to-Network Relay#2 shall perform paging respectively. In the case of FIG. 8c, when NG-RAN#1 and NG-RAN#2 perform RAN paging, the UE and UE-to-Network Relay shall perform paging respectively. For FIG. 8d, when NG-RAN#1 and NG-RAN#2 perform RAN paging, UE-to-Network Relay# 1 and UE-to-Network Relay#2 shall perform paging respectively.

In the above case where the UE-to-Network Relay performs RAN paging on behalf of the UE, the UE-to-Network Relay shall obtain the UE's paging related information (e.g., one or more of the following information: 5G-S-TMSI (or 5G-GUTI), PO information, I-RNTI, Path identification information, UE's RAN-based Notification Area (RNA) information) from the UE and/or the network.

If the paging related information of the UE changes, the UE and/or the network may provide the changed information to the UE-to-Network Relay.

To avoid a situation where RAN paging must be performed for every path where the UE is in the RRC _INACTIVE state, the UE may be prevented from entering the RRC_INACTIVE state if the UE uses multiple paths. For example, the AMF may decide to prevent the UE from entering the RRC _INACTIVE state and instruct the NG-RAN to do so, or the NG-RAN may decide to prevent the UE from entering the RRC _INACTIVE state. The instructions given by the AMF may be explicit or implicit, e.g., the AMF may transmit information instructing the NG-RAN not to transition the UE to RRC_INACTIVE, the AMF may not transmit RRC_INACTIVE related assistance information (i.e., RRC Inactive Assistance Information) to the NG-RAN, etc.

If the UE is using multiple paths, the operation to prevent the UE from entering the RRC_INACTIVE state may be performed when the UE adds a path (i.e., forms a second path). Alternatively, the action to prevent the UE from entering the RRC _INACTIVE state may be performed from the first time the UE forms a path. In the latter case, the AMF may perform the above prevention action based on information about whether the UE is able to form/use multi-path, information about whether the UE wants to form/use multi-path, etc.

### 3. The third example of the present disclosure

A third example of the present disclosure describes an example of managing a consolidated path when multiple paths used by a UE are served by the same NG-RAN, and an example where RAN paging is performed over one path.

To improve the problem of RAN paging behavior over multiple paths described in the second example of the present disclosure, an example of managing a unified path when multiple paths of a UE are served by the same NG-RAN is described, and an example of performing RAN paging over a single path is described.

This may be in a manner similar to performing CN paging described in the first example of the present specification through a single path. Accordingly, the matters described in the first example of the present specification, such as AMF operations, CN paging-related operations, NAS-related operations, and the like, may be interpreted/applied by substituting NG-RAN operations, RAN paging-related operations, AS-related operations, and the like.

Based on information provided by the UE and/or AMF, the NG-RAN may recognize and/or determine that it serves multiple paths for a single UE. The information may be, for example, identification information of the UE, identification information of the path, etc. Regarding the NG-RAN obtaining/determining the path identification information, reference may be made to the first example of the present disclosure of the present specification.

When the NG-RAN converts the paths of the UEs it serves to RRC_INACTIVE, it may provide the I-RNTI it serves to the UEs with the same/common allocation for all paths of the UEs it serves. In addition, the NG-RAN may equally/uniformly allocate and provide the RNA for all paths of the UEs it serves. In a similar manner to the AMF managing the CM state for a UE as described in the first example of the opening example of the present specification, the NG-RAN may manage the RRC state for a UE. Accordingly, the UE may manage the same information as the NG-RAN, or the UE may be considered to manage the information in the same manner as the NG-RAN.

The above management may also be considered as the integrated management of the UE's RRC/AS or RRC/AS context or UE context or RRC INACTIVE or RRC INACTIVE context.

The UE may decide to perform RAN paging over more than one path for paths served by the same NG-RAN (or for paths provided with the same I-RNTI). Instead of the UE deciding, the NG-RAN may decide to perform RAN paging over only one of the UE's paths and provide the UE with information about the determined path.

The above determination of the path for performing RAN paging may also be interpreted as determining the UE performing the RAN paging. This is because if RAN paging is performed on the direct path, the UE performs RAN paging directly, and if RAN paging is performed on the indirect path, the UE to network Relay performs RAN paging.

If it is decided to perform RAN paging over a direct path, the UE performs the paging directly, and if it is decided to perform RAN paging over an indirect path, the UE may request the UE-to-Network Relay on that path to perform the paging. This request may be explicit or implicit. The UE-to-Network Relay may obtain the paging related information of the UE for which it needs to perform paging on its behalf (e.g., one or more of the following information: 5G-S-TMSI (or 5G-GUTI), PO information, I-RNTI, UE's RNA information) from the UE, or it may be provided by the network. Alternatively, the UE-to-Network Relay may obtain some information from the UE and some information from the network.

The operation of performing the RAN paging may be to monitor the UE's PO for paging and receive a paging message. The action of the UE-to-Network Relay performing RAN paging for the UE may be to monitor the UE's PO for paging, receive a paging message, and forward the received paging message to the UE.

The UE (or Remote UE) may also request the UE-to-Network Relay not to perform RAN paging when it is not required to perform RAN paging.

If the indirect path is multi-hop, the UE-to-Network Relay performing the RAN paging may be the UE-to-Network Relay communicating over the Uu interface with the network on the path (i.e., the most distal UE-to-Network Relay from the UE perspective).

When determining which paths the UE or NG-RAN performs RAN paging on (i.e., when determining which UE performs RAN paging), the information in a) through h) described in the second example of the first example of this disclosure may be considered. Further, among the paths utilized by the UE, whether the RRC state of the UE is in the RRC _INACTIVE state may be considered (if the RRC state of the UE is managed for each path).

The point in time at which the UE or NG-RAN determines which path to perform RAN paging may vary. For example, the point in time at which the UE or NG-RAN determines which path to perform RAN paging may vary, such as when there are multiple paths served by the same NG-RAN, when it actually becomes necessary to perform RAN paging, when the UE enters the RRC_INACTIVE state, when the UE enters the RRC_INACTIVE state for all paths of the UE, or when the UE enters the RRC _INACTIVE state for any one path of the UE.

If the path on which RAN paging is performed changes (e.g., because a new path is added or an existing path is released/removed) and the path on which RAN paging is performed is an indirect path, the UE or NG-RAN may request the UE-to-Network Relay on that path to perform RAN paging. And if there is a UE-to-Network Relay that was previously performing RAN paging, the UE or NG-RAN may request this UE-to-Network Relay to stop performing RAN paging.

When performing RAN paging, the NG-RAN may include path identification information in the paging message that indicates the path associated with the PDU session. For example, the NG-RAN may include in the paging message path identification information indicating the path associated with the paging or the path that caused the paging, the path that requires paging, the path that allows the UE to establish/resume association with the network (i.e., RRC association), or, if the paging is for a PDU session, the path associated with the PDU session. If RAN paging is to be performed for multiple paths simultaneously, the NG-RAN may include path identification information for all paths requiring such paging.

If the path for which the UE is performing RAN paging is one of the paths requiring paging (i.e., one of the paths for which the UE is trying to establish/resume association with the network (i.e., RRC association)), the NG-RAN may not include path identification information for the path in the paging message.

When the UE receives a paging message for RAN paging (or, if paging is performed by the UE-to-Network Relay, the UE receives the paging message from the UE-to-Network Relay), it may determine, based on the path identification information includeed in the paging message (or the absence of path identification information in the paging message), for which path(s) a connection with the network (i.e., an RRC connection) should be formed/resumed. Accordingly, the UE may initiate the RRC connection/resumption procedure for (or over) the path(s) requiring the formation/resumption of a connection (i.e., RRC connection) with the network.

### 4. The fourth example of the present disclosure

The fourth example of the present disclosure illustrates an example of performing a paging procedure according to the various examples described in the first example through the third disclosure of the present disclosure.

For example, the fourth example of the present disclosure illustrates an example where the paging procedure is performed over the direct path, in a situation where the multi-path includes both a direct path and an indirect path. In other words, the fourth example of the present disclosure illustrates an example where the UE receives the paging message directly.

The following drawings are intended to illustrate specific embodiments of the present disclosure. The designations of specific devices or the designations of specific signals/messages/fields shown in the drawings are for illustrative purposes only, and the technical features of the present specification are not limited to the specific designations used in the drawings below.

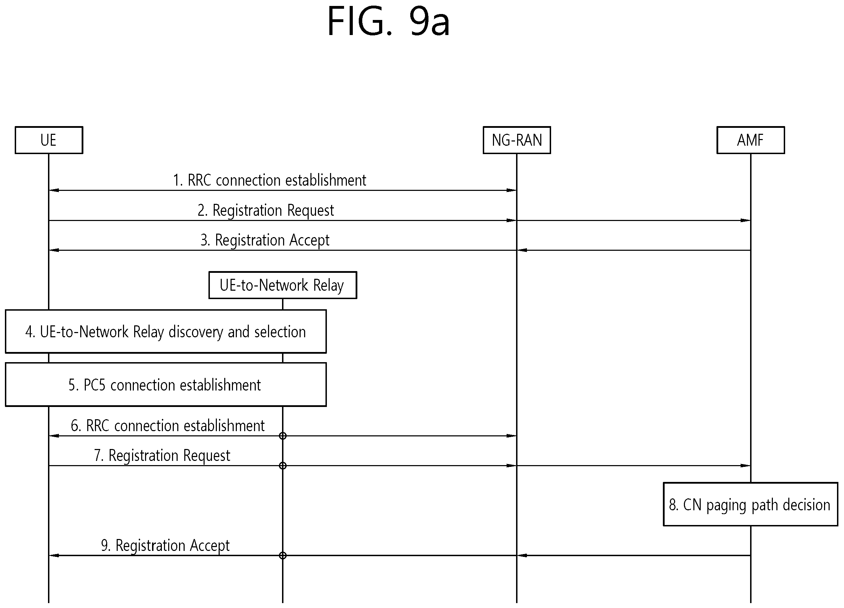

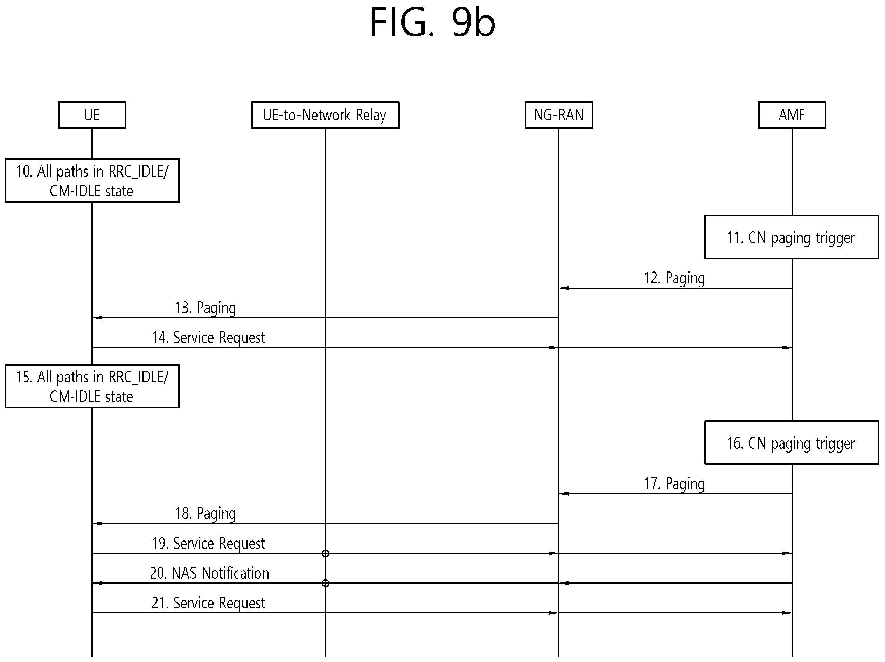

**FIGS. 9a** **and** **9b** **illustrate one example of operation according to the fourth example of the present disclosure.**

Step 1. The UE may establish RRC connection with NG-RAN via direct path.

Step 2-3. The UE may perform the registration procedure with the AMF. Accordingly, the UE may transmit a Registration Request message to the AMF. The AMF may then assign a 5G-GUTI to the UE and transmit a Registration Accept message including the 5G-GUTI to the UE.

Step 4. The UE may navigate to the UE-to-Network Relay and select the UE-to-Network Relay to use the indirect path.

Step 5. The UE may establish a PCS connection with the UE-to-Network Relay.

Step 6. The UE may establish an RRC connection with the network via UE-to-Network Relay.

Step 7. To add a path, the UE may transmit a Registration Request message to the AMF. The Registration Request message may be transmitted to the network via UE-to-Network Relay.

The UE may transmit an RRC message to the NG-RAN that includes a Registration Request message. In the RRC message, the UE may include information related to the AMF selected in the registration procedure over the direct path (e.g., information such as the 5G-GUTI received in step 3, which may be used to identify the AMF) to ensure that the same AMF is selected. In other words, the NG-RAN may select the same AMF as the AMF serving the existing direct path based on the AMF-related information.

The Registration Request message may include information indicating that a path is being added, path identification information (such as that the path type is an indirect path), etc.

Step 8. The AMF recognizes that a path has been added for the UE and may decide to manage the UE's Mobility Management (MM) in a unified manner. For example, the AMF may unifiedly manage the 5G-GUTI, Registration Area. Regarding the UE's CM state, the AMF may manage/store the CM state for each path. For details of such integrated MM management and steps 1 through 7, reference may be made to the first example of the first disclosure.

Further, the AMF may select/determine a path to perform CN paging (i.e., a UE to perform CN paging). In this embodiment, the AMF may select/determine a direct path to perform CN paging. As such, reference may be made to the second example of the first example of the present disclosure for details on selecting and/or determining a path (i.e., a UE to perform CN paging) for the AMF to perform CN paging, and to step 9 through step 19.

Step 9. The AMF may transmit a Registration Accept message to the UE. The Registration Accept message may be transmitted to the UE via UE-to-Network Relay.

To prevent a UE using multiple paths from entering the RRC_INACTIVE state, the AMF may provide information to the NG-RAN instructing the NG-RAN not to switch the UE to RRC_INACTIVE, or may not provide the NG-RAN with RRC _INACTIVE related assistance information (i.e., RRC Inactive Assistance Information). These operations may subsequently be performed each time the AMF transmits a message to the NG-RAN (e.g., to transmit a NAS message to the UE) while the UE is using multiple paths. With respect to preventing a path from entering the RRC _INACTIVE state when the UE is utilizing multiple paths in this manner, reference may be made to the second example in the introduction of the present specification.

The Registration Accept message may include information about the path for CN paging (i.e., information indicating that it is a direct path). Based on the information about the path for CN paging, the UE may know that it should receive direct paging.

Step 10. All paths of the UE may be in RRC_IDLE/DM-IDLE state.

Step 11. A situation may arise where CN paging is required (e.g., need to transmit N1 signaling to the UE, need to transmit mobile-terminated SMS to the UE, need to transmit mobile-terminated data to the UE). In step 11, the transmission operation in situations requiring CN paging may mean that it is performed over a direct path.

Step 12. The AMF may transmit a paging message to the NG-RAN to perform the paging. The paging message may include identification information of the path associated with the paging (which may be information indicating that it is a direct path).

Step 13. The NG-RAN may transmit a paging message including identifying information of the path associated with the paging.

Based on the path information along which the CN paging is performed provided by the AMF in step 9 above, the UE may know that it should receive the paging directly, and the UE may receive the paging message.

Step 14. The UE may determine that it needs to communicate with the network over the direct path based on the identification information of the path associated with the paging. The UE may perform a service request procedure to the network over the direct path.

A direct path with RRC_CONNECTED/CM-CONNECTED status allows the network to communicate with the UE.

Step 15. As the direct path of the UE enters the RRC_IDLE/CM-IDLE state, all paths of the UE may enter the RRC _IDLE/CM-IDLE state. It may be assumed that the UE's indirect path has been in the RRC_IDLE/CM-IDLE state continuously since step 10. The AMF may manage and/or store the CM state for the UE's direct and indirect paths.

Step 16. There may be situations where CN paging is required (e.g., to transmit N1 signaling to the UE, to transmit mobile-terminated SMS to the UE, to transmit mobile-terminated data to the UE). In step 16, the transmission behavior in the situation where CN paging is required may mean that the above transmission is performed via an indirect path.

Step 17. To perform the paging, the AMF may transmit a paging message to the NG-RAN. The paging message may include identification information of the path associated with the paging (which may be information indicating that it is an indirect path).

Step 18. the NG-RAN may transmit a paging message including the identification information of the path associated with the paging.

Based on the path information for which the CN paging is performed provided by the AMF in step 9 above, the UE may know that it should receive the paging directly, and the UE may receive the paging message.

Step 19. Based on the identification information of the path associated with the paging, the UE may determine that it needs to communicate with the network via the indirect path. Therefore, it may perform the service request procedure to the network via the indirect path, i.e. via UE-to-Network Relay.

The indirect path with RRC_CONNECTED/CM-CONNECTED status allows the network to communicate with the UE.

Step 20. There may be situations where communication needs to be performed over the UE's direct path (e.g., mobile-terminated data needs to be transmitted to the UE). Since the indirect path of the UE is in the CM-CONNECTED state, the AMF may decide to transmit a NAS Notification message to the UE over the indirect path instead of performing CN paging. The AMF may transmit a NAS Notification message to the UE over the indirect path, including path identification information (which may be information indicating that it is a direct path) for the path over which the UE should establish/resume connection with the network.

Step 21. Based on the NAS Notification message received, the UE may determine that it needs to communicate with the network via the direct path. Therefore, the UE may perform the Service Request procedure to the network via the direct path.

In connection with step 20 through step 21, reference may be made to the second example of the first example of the present disclosure.

With the direct path in RRC_CONNECTED/CM-CONNECTED state, the network may communicate with the UE.

### 5. The fifth example of the present disclosure

Fifth example of the present disclosure illustrates an example of performing a paging procedure according to various examples described in first through third examples of the present disclosure.

For example, the fifth example of the present disclosure illustrates an example where the paging procedure is performed over the indirect path, in a situation where the multi-path includes both a direct path and an indirect path. In other words, the fifth example of the present disclosure illustrates an example where the UE-to-Network Relay receives the paging message and forwards the paging message to the UE.

The following drawings are intended to illustrate specific embodiments of the present disclosure. The designations of specific devices or the designations of specific signals/messages/fields shown in the drawings are for illustrative purposes only, and the technical features of the present specification are not limited to the specific designations used in the drawings below.

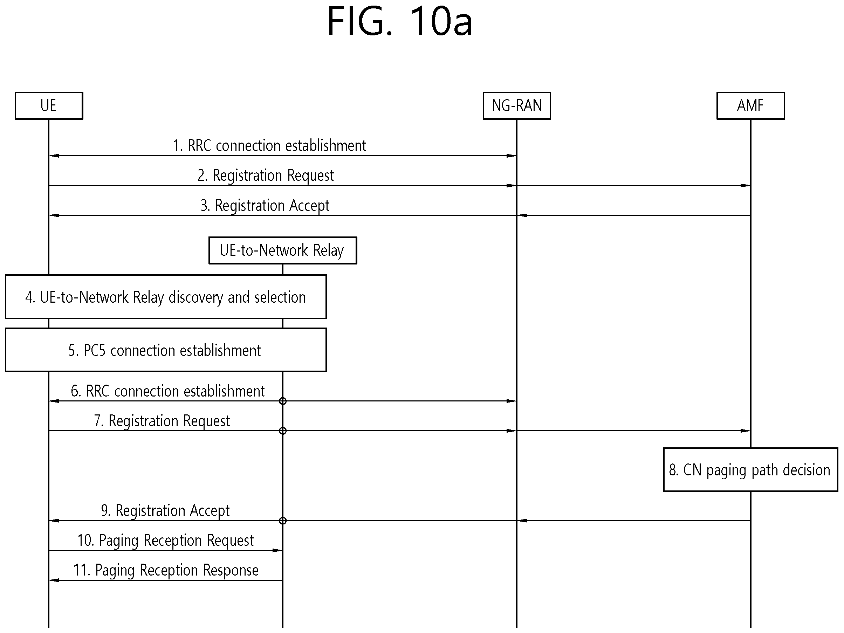

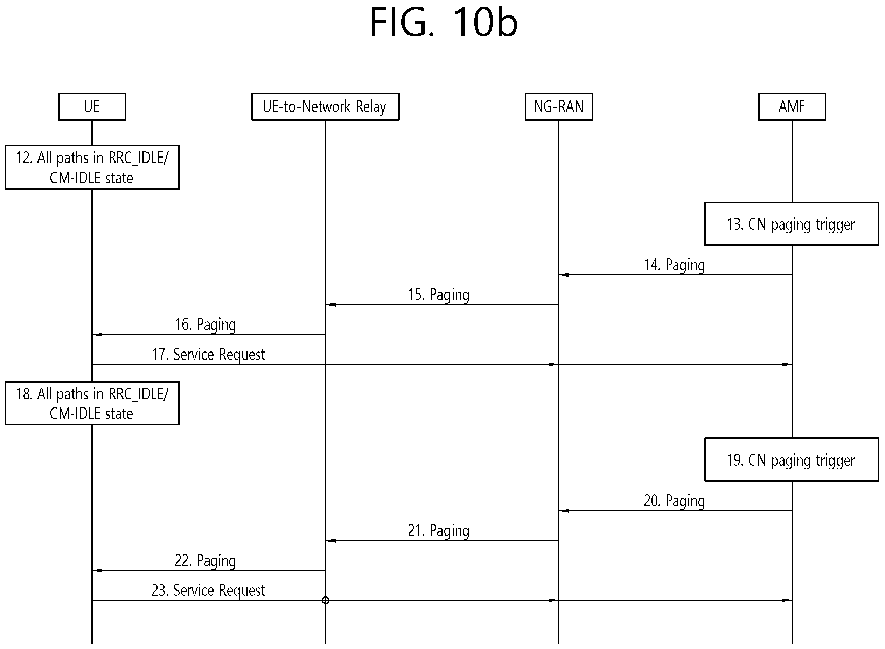

**FIGS. 10a** **and** **10b** **illustrate one example of operation according to the fifth example of the present disclosure.**

Steps 1 ~ 7. Steps may be performed in the same manner as Steps 1 through 7 in the examples of FIG. 9a and FIG. 9b.

Step 8. The AMF recognizes that a path has been added for the UE and may decide to manage the UE's MM (Mobility Management) in an integrated manner. As a result, The AMF may manage 5G-GUTI and Registration Area in an integrated manner. Regarding the UE's CM state, the CM state for each path may be managed/stored. For details of such integrated MM management and steps 1 to 7, reference may be made to the first example of the first part of the present disclosure.

Further, the AMF may select/determine a path to perform CN paging (i.e., a UE to perform CN paging). In this embodiment, the AMF may select/determine a direct path to perform CN paging. As such, reference may be made to the second example of the first example of the present disclosure for details on selecting and/or determining a path for the AMF to perform CN paging (i.e., a UE to perform CN paging) and step 9 through step 23.

Step 9. The AMF may transmit a Registration Accept message to the UE. The Registration Accept message may be transmitted to the UE via UE-to-Network Relay.

To prevent a UE using multiple paths from entering the RRC_INACTIVE state, the AMF may provide information to the NG-RAN instructing the NG-RAN not to switch the UE to RRC _INACTIVE, or may not provide the NG-RAN with RRC _INACTIVE related assistance information (i.e., RRC Inactive Assistance Information). These actions may subsequently be performed each time the AMF transmits a message to the NG-RAN (e.g., to transmit a NAS message to the UE) while the UE is using multiple paths. With respect to preventing a path from entering the RRC _INACTIVE state when the UE is utilizing multiple paths in this manner, reference may be made to the second example in the introduction of the present specification.

The Registration Accept message may include information about the path to perform CN paging (i.e., information indicating that it is an indirect path). Based on the information about the path for CN paging, the UE may know that the UE-to-Network Relay should receive the paging message.

Step 10. The UE may transmit a message to the UE-to-Network Relay requesting to receive a paging message. The message may include paging related information of the UE (e.g., 5G-S-TMSI).

The above message may be a PCS-S message or a PCS-RRC message.

Step 11. The UE-to-Network Relay may respond to the UE.

Step 12. All paths of the UE may enter the RRC_IDLE/DM-IDLE state.

Step 13. A situation may arise where CN paging is required (e.g., need to transmit N1 signaling to the UE, need to transmit mobile-terminated SMS to the UE, need to transmit mobile-terminated data to the UE). In Step 13, the transport behavior in situations where CN paging is required may mean that it is performed over a direct path.

Step 14. The AMF may transmit a paging message to the NG-RAN to perform the paging. The paging message may include identification information of the path associated with the paging (which may be information indicating that it is a direct path).

Step 15. the NG-RAN may transmit a paging message including identifying information of the path associated with the paging.

Based on the paging reception request provided by the UE in step 10, the UE-to-Network Relay may know that it should receive paging on behalf of the UE, and may therefore receive the paging message.

Step 16. the UE-to-Network Relay may forward the paging message to the UE.

Step 17. The UE that receives the paging message from the UE-to-Network Relay may determine that it needs to communicate with the network via the direct path based on the identification information of the path associated with the paging. Therefore, it may perform the service request procedure to the network via the direct path.

A direct path with RRC _CONNECTED/CM-CONNECTED status allows the network to communicate with the UE.

Step 18. As the direct path of the UE enters the RRC_IDLE/CM-IDLE state, all paths of the UE may enter the RRC _IDLE/CM-IDLE state. It may be assumed that the UE's indirect path has been in the RRC_IDLE/CM-IDLE state continuously since step 12. The AMF may manage/store the CM state for the UE's direct and indirect paths.

Step 19. There may be situations where CN paging is required (e.g., to transmit N1 signaling to the UE, to transmit mobile-terminated SMS to the UE, to transmit mobile-terminated data to the UE). In step 19, the transmission behavior in the situation where CN paging is required may mean that the above transmission is performed via an indirect path.

Step 20. To perform the paging, the AMF may transmit a paging message to the NG-RAN. The paging message may include identification information of the path associated with the paging (which may be information indicating that it is an indirect path).

Step 21. the NG-RAN may transmit a paging message including identifying information of the path associated with the paging.

Based on the request to receive paging provided by the UE in step 10, the UE-to-Network Relay may know that it should receive paging on behalf of the UE, and may therefore receive the paging message.

Step 22. the UE-to-Network Relay may forward the paging message to the UE.

Step 23. The UE receiving the paging message from the UE-to-Network Relay may determine that it needs to communicate with the network via the indirect path based on the identification information of the path associated with the paging. The UE may perform a service request procedure to the network via the indirect path, i.e. via UE-to-Network Relay.

The indirect path with RRC _CONNECTED/CM-CONNECTED status allows the network to communicate with the UE.

### 6. The sixth example of the present disclosure

Example 6 of the present disclosure illustrates an example of performing a paging procedure according to various examples described in Examples 1 through 3 of the present disclosure.

For example, Example 6 of the present disclosure illustrates a change from a situation where the multi-path includes both a direct path and an indirect path, to a situation where the paging procedure is performed over the indirect path, to a situation where the paging procedure is performed over the indirect path.

The following drawings are intended to illustrate specific embodiments of the present disclosure. The designations of specific devices or the designations of specific signals/messages/fields shown in the drawings are for illustrative purposes only, and the technical features of the present specification are not limited to the specific designations used in the drawings below.

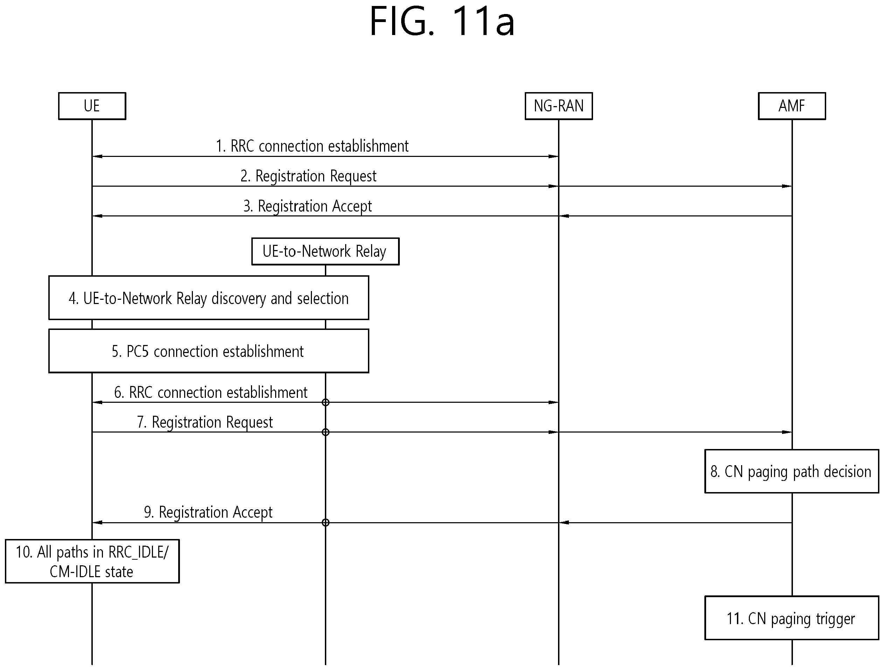

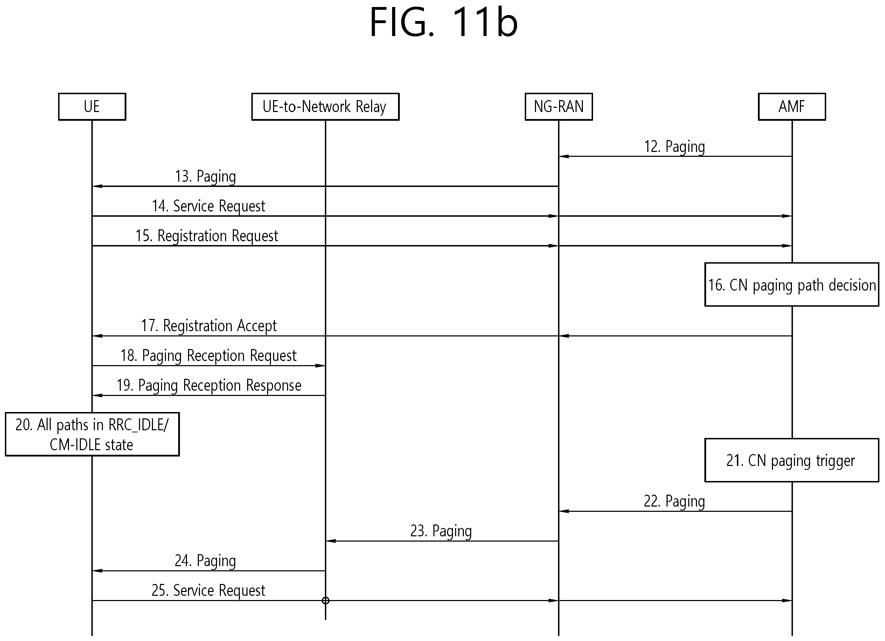

**FIGS. 11a** **and** **11b** **illustrate one example of operation according to the sixth example of the present disclosure.**

Steps 1 through 7 may be performed in the same manner as Steps 1 through 7 in the examples of FIG. 9a and FIG. 9b.

Step 8. The AMF recognizes that a path has been added for the UE and may decide to manage the UE's Mobility Management (MM) in a unified manner. For example, the AMF may unifiedly manage 5G-GUTI, Registration Area. Regarding the UE's CM state, the AMF may manage/store the CM state for each path. For details of such integrated MM management and steps 1 to 7, reference may be made to the first example of the first part of the present disclosure.

Further, the AMF may select/determine a path to perform CN paging (i.e., a UE to perform CN paging). In this embodiment, a direct path may be selected/determined as the path to perform CN paging. For details of such selection/determination of a path to perform CN paging (i.e., a UE to perform CN paging), and details of step 9 to step 25, reference may be made to the second example of the first example of the present disclosure.

Step 9. The AMF may transmit a Registration Accept message to the UE. The Registration Accept message is transmitted to the UE via UE-to-Network Relay.

To prevent a UE using multiple paths from entering the RRC_INACTIVE state, the AMF may provide information to the NG-RAN instructing the NG-RAN not to transition the UE to RRC _INACTIVE, or may not provide the NG-RAN with RRC _INACTIVE related assistance information (i.e., RRC Inactive Assistance Information). This operation may subsequently be performed each time the AMF transmits a message to the NG-RAN (e.g., to transmit a NAS message to the UE) while the UE is using multiple paths. With respect to preventing a path from entering the RRC _INACTIVE state when the UE is utilizing multiple paths in this manner, reference may be made to the second example in the present disclosure of the present specifciation.

The Registration Accept message may include information about the path for CN paging (i.e., information indicating that it is a direct path). Based on the information about the path for CN paging, the UE may know that it should receive direct paging.

Steps 10 through 11 may be performed in the same manner as Steps 10 through 11 in the examples of FIGS. 9a and 9b.

Step 12. The AMF may transmit a paging message to the NG-RAN to perform the paging. The paging message may include identification information of the path associated with the paging (which may be information indicating that it is a direct path).

Step 13. the NG-RAN may transmit a paging message including identifying information of the path associated with the paging.

Based on the path information for which CN paging is performed provided by the AMF in step 9 above, the UE may know that it should receive the paging directly, and the UE may receive the paging message.

Step 14. The UE may determine that it needs to communicate with the network over the direct path based on the identification information of the path associated with the paging. The UE may perform a service request procedure to the network over the direct path.

A direct path with RRC _CONNECTED/CM-CONNECTED status allows the network to communicate with the UE.

Step 15. To provide path preference/priority information (e.g., indirect path is more preferred/higher priority) to the AMF, or to request a path change where CN paging is performed, the UE may transmit a Registration Request message. For example, the UE may transmit a Registration Request message that includes path preference information and/or path priority information. For example, the UE may transmit a registration request message that includes information related to a path change request. It should be noted that procedures other than the registration procedure may be used to achieve the above objectives (either as extensions of other existing MM related procedures or as newly defined procedures).

Step 16. Upon receiving the above information and/or request from the UE, the AMF may select/determine the path to perform CN paging (i.e., the UE to perform CN paging) based on the information and/or request. As a result, it may select/determine the indirect path as the path to perform CN paging, i.e., it may change the path to perform CN paging from the direct path to the indirect path.

Step 17. The AMF may transmit a Registration Accept message to the UE. The Registration Accept message may include information about the path for CN paging (i.e., information indicating that it is an indirect path). Based on the information about the path for CN paging, the UE may know that the UE-to-Network Relay should receive the paging.

Step 18. The UE may transmit a message to the UE-to-Network Relay requesting to receive paging. The message may include paging related information (e.g., 5G-S-TMSI) from the UE.

The above message may be a PCS-S message or a PCS-RRC message.

Step 19. The UE-to-Network Relay may respond to the UE.

Step 20. As the UE's direct path enters the RRC_IDLE/CM-IDLE state, all paths of the UE enter the RRC _IDLE/CM-IDLE state. It may be assumed that the UE's indirect path has been in the RRC_IDLE/CM-IDLE state since step 10. The AMF may manage/store the CM state for the UE's direct and indirect paths.

Step 21. situations may arise where CN paging is required (e.g., to transmit N1 signaling to the UE, to transmit mobile-terminated SMS to the UE, to transmit mobile-terminated data to the UE). The transport operation in situations where CN paging is required may mean that it is performed over a direct path.

Step 22. The AMF may transmit a paging message to the NG-RAN to perform the paging. The paging message may include identification information of the path associated with the paging (which may be information indicating that it is a direct path).

Step 23. the NG-RAN may transmit a paging message including identifying information of the path associated with the paging.

Based on the request to receive paging provided by the UE in step 18, the UE-to-Network Relay may know that it should receive paging on behalf of the UE, and may therefore receive the paging message.

Step 24. the UE-to-Network Relay may forward the paging message to the UE.

Step 25. The UE receiving the paging message from the UE-to-Network Relay may determine that it needs to communicate with the network via the direct path based on the identification information of the path associated with the paging. Therefore, the UE may perform the service request procedure to the network via the direct path, i.e. via UE-to-Network Relay.

A direct path with RRC _CONNECTED/CM-CONNECTED status allows the network to communicate with the UE.

### 7. The seventh example of the present disclosure

The seventh example of the present disclosure illustrates one example of the operation of a UE and the behavior of an AMF performing a paging procedure according to the various examples described in the first exmaple to the sixth example of the present disclosure.

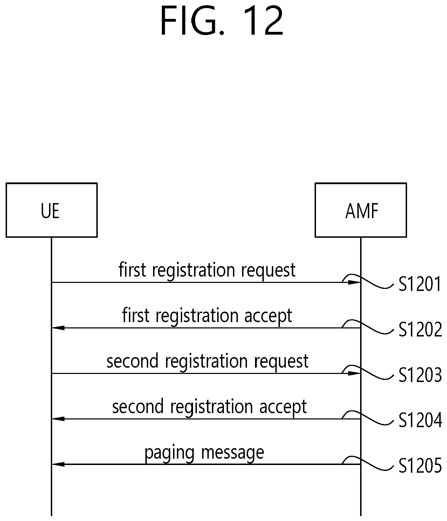

Referring now to FIG. 12, the following describes the operation of the UE and the operation of the AMF in accordance with various examples of the present disclosure.

The following drawings are intended to illustrate specific embodiments of the present disclosure. The designations of specific devices or the designations of specific signals/messages/fields shown in the drawings are for illustrative purposes only, and the technical features of the present specification are not limited to the specific designations used in the drawings below.

**FIG. 12** **illustrates one example of operation of a UE and one example of operation of an AMF according to the present disclosure.**

The example of FIG. 12 illustrates one example of terminal (e.g., UE) and/or network (e.g., NG-RAN, AMF, SMF, UPF, etc.) behavior according to various examples of the present disclosure described above. Note that the behavior of the terminal and/or the behavior of the network (e.g., NG-RAN, AMF, SMF, UPF, etc.) described in the example of FIG. 12 is illustrative only, and the scope of the present disclosure is not limited by what is described in the example of FIG. 12. For example, the terminal and/or network (e.g., NG-RAN, AMF, SMF, UPF, etc.) may perform the operations previously described in any of the first through twelfth examples of the present disclosure, even if not illustrated in the example of FIG. 12.

In the example of FIG. 12, the UE and AMF may support communication based on a plurality of paths as described in various examples of the present disclosure.

Note that in the example of FIG. 12, only a UE and an AMF are shown, but this is for illustrative purposes only. For example, the NG-RAN, SMF, UPF, etc. described in various examples herein may also perform the operations described in the example of FIG. 12. For example, in the example of FIG. 12, a signal transmitted by the UE may be transmitted to the NG-RAN, AMF. For example, in the example of FIG. 12, the signal transmitted by the AMF may be delivered to the UE via the NG-RAN.

In step S1201, the UE may transmit a first registration request message via the first path. The first registration request message may be transmitted to the NG-RAN via the first path, and the NG-RAN may transmit the first registration request message to the AMF.

In step S1202, in response to the first registration request message, the AMF may transmit a first registration accept message over the NG-RAN to the UE.

In step S1203, the UE may transmit a second registration request message via the second path. The second registration request message may be transmitted to the NG-RAN via the second path, and the NG-RAN may transmit the second registration request message to the AMF.

For example, the second registration request message may include information indicating that the second path over which the second registration request message was transmitted has been added as a path for the UE.

The second registration request message may include path identification information. For example, the path identification information may include at least one of the following: a path number, a path ID, the order of formation of the path, a path type, a priority of the path, a preference of the path, whether the path is a main path, information related to a UE-to-Network Relay if the path type is an indirect path, or the number of UE-to-Network Relays on the path if the path type is an indirect path.

The first path and the second path may be different communication paths created between the UE and the NG-RAN.

Note that, based on information received indicating that a second path has been added as a path for the UE, the paging path may be determined. The paging path may be determined based on at least one of: whether a direct path exists between the first path or the second path, the order of generation of the first path and the second path, the priority of the first path and the second path, and whether a main path exists between the first path and the second path.

In step S1204, in response to the second registration request message, the AMF may transmit a second registration accept message to the UE over the NG-RAN.

For example, the second registration accept message may include information about the paging path.

The second registration request message and the second registration accept message may be different kinds of messages, for example, a path addition request message and a path addition accept message, i.e., a procedure other than the registration procedure may be used to add a path.

Note that the combination of the first path and the second path may be any of: a combination wherein the first path is a direct path and the second path is an indirect path, a combination wherein the first path is an indirect path and the first path is a direct path, a combination wherein the first path is an indirect path and the second path is an indirect path.

In step S1205, the AMF may transmit the paging message to the UE via the paging path.

For example, if the paging path is an indirect path through the UE-to-Network Relay, information about the paging path may be used by the UE to request the UE-to-Network Relay to receive paging messages.

It should be noted that in various disclosed examples, path identification information may be construed as path information, path information, path info, path characteristics, path characteristics, and the like.

As described in the present disclosure of the present specification with reference to various examples, efficient paging schemes may be supported for UEs receiving services from a network over multiple paths (i.e., paths over multiple 3GPP accesses). For example, communication based on multiple paths between the UE and the network may be efficiently supported. For example, by supporting the AMF, UE, and/or NG-RAN to perform paging over one of the multiple paths, waste of radio resources may be avoided. For example, if the multiple paths between the UE and the network include both direct and indirect paths, the paging message may be transmitted over one path so that only one of the UE or the UE-to-Network Relay has to perform actions to receive the paging message, thereby avoiding power consumption. For example, the UE may notify the network that multiple paths are being used, so that a single AMF may efficiently serve the multiple paths.

As described in the present disclosure of the present specification with reference to various examples, the following example operations may be applied:
1) The UE may establish a connection with the 5G network via the first path.
   - Path identification information may be assigned/assigned/determined for the first path;
   - The UE and AMF shall store the path identification information, if any, assigned/assigned/determined for the first path.
   - Establishing a connection with the 5G network may be one or more of the following actions: establishing an RRC connection with the NG-RAN, resuming an RRC connection with the NG-RAN, registering with the 5GC, requesting a service from the 5GC, and resuming a connection with the 5GC.
2) The UE may establish a connection with the 5G network via the second path.
   - Path identification information may be assigned/specified/determined for the second path.
   - The UE and AMF may store the path identification information, if any, assigned/assigned/determined for the second path.
   - Establishing a connection with the 5G network may be one or more of the following operations: establishing an RRC connection with the NG-RAN, resuming an RRC connection with the NG-RAN, registering with the 5GC, requesting a service from the 5GC, resuming a connection with the 5GC, adding a path to the NG-RAN, and adding a path to the 5GC.
   - When establishing a connection with the 5G network, the UE may provide the 5G-GUTI information provided by the AMF over the first path to the NG-RAN. This allows the same AMF to serve the first path and the second path.
3) The UE may select/determine the path to perform CN paging (i.e., the UE to perform CN paging).
   - When the indirect path is determined to be the path to perform CN paging, it requests paging from the UE-to-Network Relay on that path. The UE may provide the UE-to-Network Relay with paging related information (e.g., one or more of the following information: 5G-S-TMSI (or 5G-GUTI), PO information, UE's Registration Area information).
   - As CN paging needs to be performed, the UE may choose/decide which path to perform CN paging.
   - A UE that is determined to perform CN paging may perform CN paging.
4) The AMF may perform CN paging.
   - The paging message for performing the CN paging may include path identification information of the path(s) associated with the paging.
   - The NG-RAN receives a paging message from the AMF for paging the UE. The paging message transmitted by the NG-RAN may include path identification information of the path(s) associated with the paging obtained from the AMF.
5) The UE may receive the paging message.
   - If the UE-to-Network Relay performs CN paging on behalf of the UE (i.e., CN paging is performed via indirect path), the UE-to-Network Relay may forward the paging message received from the NG-RAN to the UE.
6) Based on the path identification information included in the paging message, the UE may determine which path(s) it should establish/resume association with the network (i.e., RRC association and/or NAS/N1 association).
7) The UE may initiate an RRC connection/resumption and/or Service Request procedure for the path(s) requiring the formation/resumption of a connection (i.e., RRC connection and/or NAS/N1 connection) with the network (or over the path(s) requiring the formation of a connection (i.e., RRC connection and/or NAS/N1 connection) with the network).
8) The first path and the second path may be one of the following:
   - One of the paths is a direct path and the other is an indirect path.
   - Both paths are indirect paths. The two indirect paths may be paths through different UE-to-Network Relays.

For reference, the operation of the terminal (e.g., UE, UE-to-Network Relay) described in the present specification may be implemented by the apparatus of FIGS. 1 to 4 described above. For example, the terminal (e.g., UE, UE-to-Network Relay) may be the first device 100 or the second device 200 of FIG. 2. For example, an operation of a terminal (e.g., UE, UE-to-Network Relay) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE, UE-to-Network Relay) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE, UE-to-Network Relay) described in the present disclosure of the present specification.

For reference, the operation of a network node (e.g., AMF, SMF, UPF, etc.) or base station (e.g., NG-RAN, gNB, eNB, RAN, E-UTRAN etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by an Access and Mobility Management Function (AMF), and comprising:
receiving a first registration request message from a user equipment (UE) over a New Generation Radio Access Network (NG-RAN);
transmitting, in response to the first registration request message, a first registration accept message to the UE over the NG-RAN;
receiving, in response to the first registration request message, a second registration request message from the UE over the NG-RAN;
transmitting, in response to the second registration request message, a second registration accept message to the UE over the NG-RAN; and
transmitting a paging message to the UE over the NG-RAN,
wherein the second registration request message includes information indicating that a second path, over which the second registration request message was sent, has been added as a path for the UE,
wherein the paging message is transmitted to the UE over a paging path, and
wherein the paging path being determined to be one of the second path or the first path over which the first registration request message was transmitted.

2. The method of claim 1,
wherein the first path and the second path are different communication paths generated between the UE and the NG-RAN.

3. The method of claim 1,
wherein the second registration accept message includes information related to paging path.

4. The method of claim 3,
if the paging path is an indirect path through a UE-to-Network Relay, wherein the information related to the paging path is used by the UE to request that the UE-to-Network Relay receive a paging message.

5. The method of claim 1, further comprising:
determining the paging path based on that the information indicating that the second path has been added as a path for the UE is received.

6. The method of claim 5,
wherein the paging path is determined, based on at least one of: whether a direct path exists among the first path or the second path, an order of generation of the first path and the second path, the priority of the first path and the second path, and whether a main path exists among the first path and the second path.

7. The method of claim 1,
wherein a combination of the first path and the second path is any one of among:
a combination that the first path is a direct path and the second path is an indirect path;
a combinaiton that the first path is an indirect path and the second path is a direct path;
a combination that wherein the first path is an indirect path and the second path is an indirect path.

8. The method of claim 1,
wherein the path identification information includes at least one of:
a path number, a path ID, a order of generation of the path, a path type, a priority of the path, a preference of the path, whether the path is a main path, information relating to a UE-to-Network Relay if the path type is an indirect path, or a number of UE-to-Network Relays on the path if the path type is an indirect path.

9. The method of claim 1,
wherein the second registration request message is a path addition request message,
wherein the second registration accept message is a path addition accept message.

10. Access and Mobility Management Function (AMF) for performing cummunication, the AMF comprising:
at least one transceiver;
at least one processor; and
at least one computer memory operably connectable to the at least one processor and storing instructions that, based on being executed by the at least one processor, perform operations comprising:
receiving a first registration request message from a user equipment (UE) over a New Generation Radio Access Network (NG-RAN);
transmitting, in response to the first registration request message, a first registration accept message to the UE over the NG-RAN;
receiving, in response to the first registration request message, a second registration request message from the UE over the NG-RAN;
transmitting, in response to the second registration request message, a second registration accept message to the UE over the NG-RAN; and
transmitting a paging message to the UE over the NG-RAN,
wherein the second registration request message includes information indicating that a second path, over which the second registration request message was sent, has been added as a path for the UE,
wherein the paging message is transmitted to the UE over a paging path,
wherein the paging path being determined to be one of the second path or the first path over which the first registration request message was transmitted.

11. A method for performing communication, the method performed by a User Equipment (UE), and comprising:
transmitting a first registration request message to an Access and Mobility Management Function (AMF) over a New Generation Radio Access Network (NG-RAN);
receiving, in response to the first registration request message, a first registration accept message from the AMF over the NG-RAN;
transmitting, in response to the first registration request message, a second registration request message to the AMF over the NG-RAN;
receiving, in response to the second registration request message, a second registration accept message from the AMF over the NG-RAN; and
receiving a paging message from the the AMF over the NG-RAN,
wherein the second registration request message includes information indicating that a second path, over which the second registration request message was sent, has been added as a path for the UE,
wherein the paging message is transmitted to the UE over a paging path, and
wherein the paging path being determined to be one of the second path or the first path over which the first registration request message was transmitted.

12. A User Equipment (UE) for performing cummunication, the UE comprising:
at least one transceiver;
at least one processor; and
at least one computer memory operably connectable to the at least one processor and storing instructions that, based on being executed by the at least one processor, perform operations comprising:
transmitting a first registration request message to an Access and Mobility Management Function (AMF) over a New Generation Radio Access Network (NG-RAN);
receiving, in response to the first registration request message, a first registration accept message from the AMF over the NG-RAN;
transmitting, in response to the first registration request message, a second registration request message to the AMF over the NG-RAN;
receiving, in response to the second registration request message, a second registration accept message from the AMF over the NG-RAN; and
receiving a paging message from the the AMF over the NG-RAN,
wherein the second registration request message includes information indicating that a second path, over which the second registration request message was sent, has been added as a path for the UE,
wherein the paging message is transmitted to the UE over a paging path, and
wherein the paging path being determined to be one of the second path or the first path over which the first registration request message was transmitted.

13. The UE of claim 12,
wherein the UE is an autonomous device in communication with at least one of a mobile terminal, a network, and an autonomous vehicle other than the UE.

14. An apparatus in telecommunications, comprising:
at least one processor; and
at least one memory storing instructions, operatively electrically coupled to the at least one processor, wherein the instructions are executed by the at least one processor to perform operations comprising:
generating a first registration request message to an Access and Mobility Management Function (AMF) over a New Generation Radio Access Network (NG-RAN);
obtaining, in response to the first registration request message, a first registration accept message from the AMF over the NG-RAN;
generating, in response to the first registration request message, a second registration request message to the AMF over the NG-RAN;
obtaining, in response to the second registration request message, a second registration accept message from the AMF over the NG-RAN; and
obtaining a paging message from the the AMF over the NG-RAN,
wherein the second registration request message includes information indicating that a second path, over which the second registration request message was sent, has been added as a path for the UE,
wherein the paging message is transmitted to the UE over a paging path, and
wherein the paging path being determined to be one of the second path or the first path over which the first registration request message was transmitted.

15. A non-transitory computer readable storage medium recording instructions, wherein the instructions, when executed by one or more processors, causing the one or more processors to perform operations compirsing:
generating a first registration request message to an Access and Mobility Management Function (AMF) over a New Generation Radio Access Network (NG-RAN);
obtaining, in response to the first registration request message, a first registration accept message from the AMF over the NG-RAN;
generating, in response to the first registration request message, a second registration request message to the AMF over the NG-RAN;
obtaining, in response to the second registration request message, a second registration accept message from the AMF over the NG-RAN; and
obtaining a paging message from the the AMF over the NG-RAN,
wherein the second registration request message includes information indicating that a second path, over which the second registration request message was sent, has been added as a path for the UE,
wherein the paging message is transmitted to the UE over a paging path, and
wherein the paging path being determined to be one of the second path or the first path over which the first registration request message was transmitted.
